# EUROPÄISCHE PATENTSCHRIFT

(11) **EP 4 313 629 B1**
(45) Veröffentlichungstag und Bekanntmachung des Hinweises auf die Patenterteilung: **12.02.2025**
(21) Anmeldenummer: 21844191.3
(22) Anmeldetag: 17.12.2021
(51) Int. Cl.: B60C 9/22, B29D 30/30

(54) **FAHRZEUGLUFTREIFEN MIT GÜRTELBANDAGE**
PNEUMATIC VEHICLE TYRE WITH BELT BANDAGE
PNEUMATIQUE DE VÉHICULE AVEC BANDAGE DE COURROIE

(30) Priorität: 26.03.2021 DE 102021203082
(43) Veröffentlichungstag der Anmeldung: 07.02.2024
(73) Patentinhaber: Continental Reifen Deutschland GmbH, 30175 Hannover (DE)
(72) Erfinder: KOVACIK, Michal, 30165 Hannover (DE)
(74) Vertreter: Continental Corporation
(86) Internationale Anmeldenummer: PCT/DE2021/200267
(87) Internationale Veröffentlichungsnummer: WO 2022/199733

(56) Entgegenhaltungen:
- EP-A1- 0 288 609
- EP-A1- 1 769 944
- EP-A1- 2 987 649
- EP-A1- 3 085 818
- EP-A2- 0 453 220
- EP-A2- 1 318 006
- WO-A1-2006/032479
- DE-A1- 102012 103 615
- DE-C1- 19 801 254
- JP-A- 2000 326 419
- US-A1- 2008 087 365

## Beschreibung

Gegenstand der Patentanmeldung ist ein Fahrzeugluftreifen mit einem Gürtel bestehend aus mindestens einer über den Reifenumfang umlaufenden Stahlcordgürtellage und einer Bandage, die über den gesamten Reifenumfang radial außen an dem Gürtel anliegt, wobei die Bandage aus einem Gummistreifen besteht, in dem zwei bis sechs Corde aus Verstärkungsfasern enthalten sind, und dieser Gummistreifen mindestens von einem axialen Ende des Gürtels bis zu mindestens dem anderen axialen Ende des Gürtels um den Gürtel in einer Wickelrichtung relativ zur Umfangsrichtung des Fahrzeugluftreifens gewickelt ist, wobei das Verhältnis der Komponente der Wickelrichtung in Achsrichtung zu der Komponente der Wickelrichtung in Umfangsrichtung entlang des Gummistreifens kleiner als 0,01 ist und über mindestens 70 % der Breite des Gürtels in Achsrichtung um nicht mehr als 2 % variiert.

Außerdem ist ein Herstellungsverfahren Gegenstand der Patentanmeldung, mit dem ein Fahrzeugluftreifen mit einem Gürtel bestehend aus mindestens einer über den Reifenumfang umlaufenden Stahlcordgürtellage und einer Bandage, die über den gesamten Reifenumfang radial außen an dem Gürtel anliegt, hergestellt wird.

### Stand der Technik

Fahrzeugluftreifen, die einem umlaufenden Gürtel mit Stahlcorden aufweisen, der sich über mindestens nahezu die gesamte Breite des Fahrzeugluftreifens erstreckt, sind seit 100 Jahren bekannt. Der Gürtel weist mindestens eine Stahlcordgürtellage auf. Dabei sind in der Matrix des Gürtellage, einem Gummiwerkstoff, die Stahlcorde vorzugsweise in einer Ebene parallel zueinander angeordnet. Die Stahlcorde bestehen aus Stahldrähten, die zumeist miteinander verdrillt sind und überwiegend beschichtet sind, z.B. mit Messing und Gummi. Der Gürtel mit den Stahlcorden erhöht im Fahrzeugluftreifen insbesondere durch seine Steifigkeit die Stabilität des Laufstreifens des Fahrzugluftreifens, der in radialer Richtung vom Gürtel aus gesehen außen an der Oberfläche des Fahrzeugluftreifens angeordnet ist. Entsprechend weist der Laufstreifen des Fahrzeugluftreifens einen geringen Rollwiderstand auf, eine geringere Beweglichkeit seiner Profilblöcke und einen geringeren Materialabrieb. Hiervon profitiert auch das Fahrverhalten des mit einem derartigen Fahrzeugluftreifen versehenen Fahrzeugs durch eine bessere Fahrstabilität, eine bessere Lenkexaktheit und einen reduzierten Schlupf.

Der Gürtel eines solchen Fahrzeugluftreifens besteht aus mindestens einer über den Reifenumfang umlaufenden Stahlcordgürtellage.

Der Gürtel kann nur aus einer über den Reifenumfang umlaufenden Stahlcordgürtellage bestehen. In diesem Fall weicht die Richtung der Stahlcorde in der Stahlcordgürtellage, die dann eine 0°- Wicklung aufweisen, eigentlich nicht oder nur sehr gering von der Umfangsrichtung des Fahrzeugluftreifens ab. Typischerweise weicht die Richtung der Stahlcorde in der Stahlcordgürtellage dann nicht mehr als 3 ° von der Umfangsrichtung ab, bevorzugt nicht mehr als 1 ° von der Umfangsrichtung und besonders bevorzugt nicht mehr als 0,3 ° von der Umfangsrichtung.

Der Gürtel kann auch aus zwei über den Reifenumfang umlaufenden Stahlcordgürtellagen besteht, wobei die Richtung der Stahlcorde in beiden Gürtellagen in einem bestimmten Winkel von der Umfangsrichtung des Fahrzeugluftreifens abweicht, der typischerweise zwischen 0 ° und 45 °liegt, bevorzugt zwischen 26 ° und 36 °. Dabei weisen die Stahlcorde jedoch zu den verschiedenen Seiten des Fahrzeugluftreifens, so dass die Richtung der Stahlcorde bezogen auf die Achsrichtung A bei beiden Gürtellagen in die zu einander entgegengesetzte Richtung weist. Die Stahlcorde in den beiden in radialer Richtung des Fahrzeugluftreifens übereinander liegenden Gürtellagen weichen dabei in einem bestimmten Winkel von der Umfangsrichtung des Fahrzeugluftreifens ab, wobei die Winkel typischerweise bis auf höchstens 2 °, bevorzugt höchstens 0,5 ° im Betrag voneinander abweichen. Dadurch, dass die Stahlcorde bezogen auf die Achsrichtung A bei beiden Gürtellagen in die entgegengesetzte Richtung weisen, stabilisieren Sie den Fahrzeugluftreifen einerseits in seiner Umfangsrichtung, gleichzeitig jedoch in seiner Achsrichtung A bzw. seiner Breite, da jeweils eine Lage von Stahlcorden in den beiden Gürtellagen gleichzeitig die Stabilität einer der Seiten des Fahrzeugluftreifens erhöht. Hierbei gibt die Achsrichtung A die Lage der Geraden im Raum an, um die der Fahrzeugluftreifen rotiert und damit auch die Gerade, zu der der Fahrzeugluftreifen prinzipiell rotationssymmetrisch ist. Zu jeder Gerade gehören prinzipiell dann zwei Richtungen im Raum, entlang derer man sich entlang der Geraden bewegen kann. In karthesischen Koordination werden diese zumeist als + - und - -Richtung bezeichnet. Die radiale Richtung des Fahrzeugluftreifens ist dann die aus den Zylinderkoordinaten bekannte radiale Richtung im Raum, die senkrecht zur Achsrichtung A steht und mit der der Abstand zur Achsrichtung zunimmt. Die beiden Gürtellagen sind dann in radialer Richtung übereinander angeordnet und weisen sowohl zur Achse A des Fahrzeugluftreifens als auch seiner Oberfläche einen unterschiedlichen Abstand auf. Beide Gürtellagen sind zumeist in der Umfangsrichtung des Fahrzeugluftreifens angeordnet, die der Umfangsrichtung der Zylinderkoordinaten entspricht. Generell lässt sich die Struktur eines Fahrzeuglaufreifens aufgrund seiner grundlegenden Rotationssymmetrie an besten mit Zylinderkoordinaten und den dabei benutzen Raumrichtungen beschreiben.

Bevorzugt weisen Fahrzeugluftreifen, die einen umlaufenden Gürtel mit Stahlcorden aufweisen, auch eine Bandage auf, die über den gesamten Reifenumfang radial, dh. in radialer Richtung, außen an dem Gürtel anliegt. Außen meint hierbei die Richtung der radialen Richtung, in der der Abstand von der Achsrichtung A des Fahrzeugluftreifens zunimmt, bzw. in der Abstand zur Oberfläche des Laufstreifens des Fahrzeuglaufreifens abnimmt.

Eine solche Bandage, die über den gesamten Reifenumfang radial außen an dem Gürtel anliegt, besteht dabei aus einem oder mehreren Gummistreifen, die mindestens ein Cord aus Verstärkungsfasern enthalten, die radial außen um den Gürtel des Fahrzeugluftreifens gewickelt sind. Diese Bandage wird vorzugsweise bei Hochgeschwindigkeitsreifen verwendet. Insbesondere wirken auf einen Fahrzeugluftreifen bei hohen Geschwindigkeiten hohe Kräfte nach außen, die Zentrifugalkräfte. Um einer Ausdehnung des Fahrzeugluftreifens hierdurch entgegen zu wirken, stabilisiert die Bandage durch die in ihren Gummistreifen vorhandenen Corde aus Verstärkungsfasern den Reifen. Hierbei werden die Corde in Umfangsrichtung um den Gürtel des Fahrzeugluftreifens gewickelt, um ihre Wirkung optimal zu entfalten. Entsprechend sind in den Gummistreifen die Corde üblicherweise in ihrer Längsrichtung in einer Ebene in gleichen Abständen zueinander angeordnet, um über die gesamte Breite der Fahrzeugluftreifens eine gleichmäßige Verstärkungswirkung zu erreichen. Daher sollte die Bandage in Achsrichtung mindestens von einem axialen Ende des Gürtels des Fahrzeugluftreifens bis zu mindestens dem anderen axialen Ende des Gürtels reichen. Vorteilhafterweise reicht die Bandage in Achsrichtung A noch über die Enden des Gürtels hinaus.

Als Verstärkungsfasern können in den Corden der Bandage insbesondere Polymerfasern verwendet werden, vor allem Nylon- oder Aramidfasern, aber auch Polyesterfasern. Zudem können auch Viskosefasern (Rayon) genutzt werden. Typischerweise besteht ein Cord aus 100 - 300 Nylonfasern oder 700 - 1300 Aramidfasern, bevorzugt aus 140 - 280 Nylonfasern oder 900 - 1100 Aramidfasern.

Durch die Bandage, insbesondere die in ihr enthaltenen Verstärkungsfasern, wird die radiale Ausdehnung eines Fahrzeugluftreifens bei hohen Geschwindigkeiten, verhindert oder zumindest reduziert. Ein Größenwachstum des Fahrzeugluftreifens in radialer Richtung wird dadurch verhindert oder zumindest verringert. Dies ist insbesondere kritisch im Schulterbereich des Fahrzeugluftreifens, in dem der Gürtel des Fahrzeugluftreifens in seiner Breite endet. Das Größenwachstum des Fahrzeugluftreifens führt zu einer ungleichmäßigen und vor allem reduzierten Auflagefläche des Reifens auf der Straße sowie einem ungleichmäßigem Reifenabrieb. Im Schulterbereich eines Fahrzeugluftreifens wirken beim Fahren zudem große Seitenkräfte, so dass ein Anwachen der Schultern die Kraftübertragung verschlechtert.

Es gibt nun verschiedene Methoden, eine Bandage auf einem Gürtel eines Fahrzeugluftreifens anzubringen. Zumeist wird hierbei zunächst der Gürtel auf der Außenseite einer drehbaren Trommel positioniert, wobei die Gürtellagen des Gürtels so positioniert werden, dass ihre Stahlcorde in Umfangsrichtung der Trommel so positioniert sind wie später in Umfangsrichtung eines fertigen Fahrzeugluftreifens. Hierbei kann der Gürtel mit Hilfe von Magneten in der drehbaren Trommel auf dieser fixiert werden, die dann auf die Stahlcorde im Gürtel anziehen und entsprechend festhalten.

Die Gummistreifen der Bandage werden dann um den Gürtel gewickelt, indem die Gummistreifen auf dem Gürtel positioniert werden, die drehbare Trommel dann rotiert und durch die Drehbewegung der Trommel sich die Gummistreifen um den Gürtel wickelt. Hierzu wird ein Zuführungseinrichtung benötigt, die die aufzuwickelnden Gummistreifen der drehbaren Trommel zuführt. Bei einer Zuführungseinrichtung kann es sich insbesondere um einen Zuführungskopf handeln, durch den der Gummistreifen mittels eines Antriebs zu der drehbaren Trommel bewegt wird. Damit der Gummistreifen über die gesamte Breite des Fahrzeugluftreifens gewickelt wird, muss sich die Zuführungseinrichtung relativ zur drehbaren Trommel bewegen. Bevorzugt bewegt sich die Zuführungseinrichtung entlang einer Achse, die parallel zur Achsrichtung A der drehbaren Trommel ist. Beim fertigen Fahrzeugluftreifen entspricht diese Achsrichtung A dann auch der Achsrichtung A, zu der er rotationssymmetrisch ist und um die er rotiert.

Wichtig beim Wickeln der Bandage um den Gürtel ist, dass die Bandage gleichmäßig um den Gürtel gewickelt wird, um so sicherzustellen, dass die Bandage gleichmäßig den Fahrzeugluftreifen stabilisiert und z.B, bei hohen Geschwindigkeiten dem Größenwachstum über die gesamte Reifenbreite entgegenwirkt. Dazu gehört, dass ein oder mehrere der Gummistreifen nicht übereinander gewickelt werden, das heißt nicht in radialer Richtung des Reifens mehrfach vorhanden sind. Dies würde die Höhe des Reifens in seiner Breite variieren lassen und so z.B. zu einem Schwingungsverhalten und Unwuchten über den Reifenumfang führen können. Ebenso sollten die Gummistreifen beim Wickeln nicht so abgelegt werden, dass übermäßige Abstände zwischen nebeneinander liegenden Abschnitten des aufgewickelten Gummistreifens bestehen.

Insbesondere aus dem wirtschaftlichen Grund einer schnellen und daher kostengünstigen Fertigung werden oft zwei Gummistreifen gleichzeitig mit zwei Zuführungsköpfen, auch Spulköpfe genannt, auf den Gürtel gewickelt, wobei die Gummistreifen oft eine größere Anzahl von parallel angeordneten Corden aus Verstärkungsfasern aufweisen. Typischerweise weist ein Gummistreifen dann 4 bis 12 Corde auf bei einer typischen Breite von 4 bis 15 mm. Es ist aber auch möglich, nach dem Verfahren Gummistreifen mit nur einem Cord oder 2 oder 3 Corden zu wickeln und ebenso Gummistreifen mit mehr als zwölf Corden. Die Aufwicklung mit zwei Zuführungsköpfen kann dabei so erfolgen, dass die Aufwicklung eines Gummistreifen zunächst an einem Ende des Gürtels beginnt und ein zweiter Gummistreifen zunächst in der Mitte des Gürtels aufgewickelt wird. Beide Zuführungsköpfe bewegen sich während der Aufwicklung der Gummistreifen dann, zumeist parallel zueinander, entlang einer oder zweier Achsen, die parallel zur Achsrichtung A der drehbaren Trommel verlaufen, bis der erste Gummistreifen in der Mitte des Gürtels angelangt und der zweite Gummistreifen das andere Ende des Gürtels erreicht. In einem anderen Verfahren mit zwei Zuführungsköpfen beginnt die Aufwicklung der Gummistreifen an beiden Enden des Gürtels und die Zuführungsköpfe bewegen sich dann auf ein oder zwei Geraden parallel zur Achsrichtung A der drehbaren Trommel aufeinander zu, bis der Gürtel in seiner gesamten Breite mit den beiden Gummistreifen umwickelt ist. In einem weiteren Verfahren beginnt die Aufwicklung der zwei Gummistreifen mit zwei Zuführungsköpfen in der Mitte des Gürtels und die Zuführungsköpfe bewegen sich dann auf ein oder zwei Geraden parallel zur Achsrichtung A der drehbaren Trommel zu den beiden Enden des Gürtels.

Dadurch, dass zwei Gummistreifen bei den Verfahren gewickelt werden, gibt es in Achsrichtung A der drehbaren Trommel nach dem Wickelprozess immer einen Bereich, in dem beide Gummistreifen vorliegen. Da die Genauigkeit der Steuerung der Wicklung begrenzt ist und beide Gummistreifen bei der Wicklung eine kleine Neigung zur Umfangsrichtung der drehbaren Trommel aufweisen müssen, ist die Gefahr groß, dass in dem angesprochenen Bereich, wo beide Gummistreifen vorliegen, die beiden Gummistreifen aufgrund des Wickelprozesses sich überlappen, d.h. in radialer Richtung übereinander liegen oder aber zumindest über einen kleinen Umfangsbereich ein Abstand zueinander aufweisen, der größer ist als der Abstand bei der Wicklung sonst zwischen nebeneinander liegenden Abschnitten eines Gummistreifens, weil eine Lücke zwischen den beiden Gummistreifen vorliegt.

Um diese Probleme zu vermeiden, kann auch nur ein Gummistreifen um den auf einer drehbaren Trommel fixierten Gürtel gewickelt werden, der nur von einer Zuführungsvorrichtung der Trommel zugeführt wird. Ein derartiges Wickelverfahren ist z.B. aus der KR 20200037992 A1 bekannt. Bei einem derartigen Verfahren wird der Gummistreifen mindestens von einem axialen Ende des Gürtels bis zu mindestens dem anderen axialen Ende des Gürtels um den Gürtel in einer Wickelrichtung relativ zur Umfangsrichtung des auf der drehbaren Trommel fixierten Gürtels gewickelt. Hierbei wird der Gummistreifen während des Wickelns mit einer geringen Zugkraft, typisch ab 5 N beaufschlagt, oft in der Größenordnung von 10 bis 20 N. Im Randbereich des Gürtels werden auch mal noch höhere Zugkräfte während des Wickelns auf den Gummistreifen ausgeübt. Typischerweise wird diese durch die Zuführungseinrichtung ausgeübt. Da nun ein Gummistreifen über die gesamte Breite des Gürtels um diesen gewickelt wird, steigt die Gefahr, dass der Gummistreifen beim Wickelvorgang vom Gürtel abrutscht, da der Prozess länger dauert und der einzelne gewickelte Gummistreifen wesentlicher länger ist. Diese Gefahr nimmt natürlich mit der Zugkraft zu, die beim Wickeln auf den Gummistreifen ausgeübt wird. Es kommt also darauf an, diesen Wickelprozess in einer sehr kontrollierten Weise auszuführen, um die Qualität dieser Wicklung zu garantieren. Dieses Problem wird essentieller, wenn Gürtel und die darum gewickelte Bandage in einem Reifen eingesetzt werden sollen, der sehr hohen Belastungen ausgesetzt ist, d.h. sehr hohen Geschwindigkeiten. In solchen UHP- Reifen (Ultra High Performance) macht sich jeder Schwachpunkt durch eine nicht optimal ausgeführte Wicklung sofort bei sehr hohen Geschwindigkeit bemerkbar, entweder durch Schwingungen bei sehr hohen Fahrzeuggeschwindigkeiten oder eine zu geringe Aufstandsfläche des Reifens beim Bremsen bei sehr hohen Geschwindigkeiten. UHP-Reifen werden insbesondere für Fahrzeugen mit sehr hohen Motorleistungen, Sport- und Rennwagen benötigt.

Die Stabilität von UHP-Reifen kann weiter gesteigert werden, wenn die Gummireifen unter einer erhöhten Zugkraft um den Gürtel gewickelt werden können. Hierbei wäre es bereits hilfreich, wenn eine derartige Wicklung in den kritischen Bereichen des Reifens, insbesondere den Schultern des Reifens erfolgt. Durch die Zugkraft beim Wickeln liegt dann die Bandage noch enger am Gürtel an und verhindert so noch besser das Größenwachstum des Reifens. Mit den bisher bekannten Wickelprozessen ist ein Wickeln unter Zugkraft von 20 N bis zu 100 N jedoch nur sehr begrenzt möglich, da durch die zusätzliche Kraftbeanspruchung der zu wickelnde Gummistreifen sich nicht mehr sicher auf dem Gürtel hält.

Die EP 3 085 818 A1 offenbart ein Verfahren zur Herstellung eines PKW-Hochgeschwindigkeitsreifens. Bei diesem Verfahren wird mit zwei Spulköpfen eine Spulbandage auf einen Gürtel aufgewickelt, wobei die Vorspannung beim Aufspulen in einem Bereich zwischen 5N und 100N variiert. Der hergestellte Reifen soll in seiner Hochgeschwindigkeitstauglichkeit verbessert sein.

Aus der DE 10 2012 103 615 A1 ist ein weiteres Verfahren zur Herstellung eines Fahrzeugreifens, bei welchem eine Spulbandage auf einer Gürtellage mit mindestens zwei Spulköpfen aufgebracht wird, bekannt. Jeder Spulkopf wird ausgehend vom mittleren Bereich des Gürtelverbands bis zu den Rändern des Gürtelverbands geführt, wobei die Vorspannung derart zwischen 15N und 100N variiert, dass der Fahrzeugreifen auf der Seite der Innenschulter eine signifikant höhere Struktursteifigkeit als auf der Seite der Außenschulter aufweist. Dadurch soll die Hochgeschwindigkeitstauglichkeit verbessert sein.

Aus der EP 2 987 649 A1 ist ein Fahrzeugluftreifen mit einer Karkasse und einer radial außerhalb der Karkasse befindlichen, anstelle einer herkömmlichen Gürtellage vorgesehenen Verstärkungslage aus in einem Harz eingebetteten Corden bekannt. Zur Bildung der Verstärkungslage wird ein in Harz eingebetteter Cord spiralförmig auf die Karkasse aufgewickelt. Der Reifen soll eine verbesserte Steifigkeit aufweisen.

Die US 2008/0087365 A1 offenbart einen Fahrzeugluftreifen mit einer Gürtelbandage, in welcher die Spannung der Corde ausgehend vom Bereich der Reifenäquatorialebene in Richtung zu den Bandagenränder zunächst abnimmt und anschließend zu den Bandagenrändern wieder ansteigt. Dies soll für den Laufstreifenabrieb, die Nässeperformance und das Abrollgeräusch günstig sein.

Die WO 2006/032479 A1 befasst sich ebenfalls mit einem Fahrzeugluftreifen mit einer Gürtelbandage mit einem spezifischen Spannungsprofil, welches für den Laufstreifenabrieb, die Nässeperformance und das Abrollgeräusch günstig sein soll.

Aus der JP 2000 326 419 A ist eine Anlage zur Herstellung eines Fahrzeugluftreifens bekannt, welche eine Andrückrolle und Vorschubrollen umfasst. Bei der Herstellung wird ein Festigkeitsträger enthaltender Gummistreifen auf einer Trommel aufgewickelt, angedrückt und mittels einer Schneideinrichtung abgelängt.

Die EP 0 453 220 A2, die EP 0 288 609 A1, die EP 1 318 006 A2 offenbaren weitere Wickelanlagen zur Fertigung von Reifenbauteilen.

Die DE 198 01 254 C1 und die EP 1 769 944 A1 offenbaren je ein weiteres Verfahren zur Herstellung eines Fahrzugluftreifens, wobei das Verfahren einen Wickelschritt umfasst.

Es ist daher die Aufgabe der Erfindung, einen Fahrzeugreifen, eine Anlage und ein Verfahren zu seiner Herstellung bereitzustellen, bei denen die Qualität und Sicherheit der UHP-Reifen durch eine bessere Wicklung der Bandage um den Gürtel gesteigert wird.

### Zusammenfassung der Erfindung

Gelöst wird die Aufgabe durch einen Fahrzeugluftreifen gemäß Patentanspruch 1.

Dies ist ein Fahrzeugluftreifen mit einem Gürtel bestehend aus mindestens einer über den Reifenumfang umlaufenden Stahlcordgürtellage und einer Bandage, die über den gesamten Reifenumfang radial außen an dem Gürtel anliegt, wobei die Bandage aus einem Gummistreifen besteht, in dem mindestens ein Cord aus Verstärkungsfasern enthalten ist, und dieser Gummistreifen mindestens von einem axialen Ende des Gürtels bis zu mindestens dem anderen axialen Ende des Gürtels um den Gürtel in einer Wickelrichtung relativ zur Umfangsrichtung des Fahrzeugluftreifens gewickelt ist, wobei das Verhältnis der Komponente der Wickelrichtung in Achsrichtung A zu der Komponente der Wickelrichtung in Umfangsrichtung entlang des Gummistreifens kleiner als 0,01 ist und über mindestens 70 % der Breite des Gürtels in Achsrichtung A um nicht mehr als 2 % variiert, wobei dabei der Abstand zweier benachbarter Corde in zwei nebeneinander liegender Abschnitten des Gummistreifens bei jeder Umfangsposition um nicht mehr als 5 % gegenüber dem Abstand der Corde im Gummistreifen variiert und die Corde in der Bandage über mindestens 25 % der Breite des Gürtels in Achsrichtung A unter einer Spannung von mindestens 3 N/mm² stehen.

Als UHP-Reifen weist ein derartiger Fahrzeugluftreifen sowohl einen Gürtel mit Stahlcorden auf, der aus mindestens einer über den Reifenumfang umlaufenden Stahlcordgürtellage besteht, als auch eine Bandage, die über den gesamten Reifenumfang radial außen an dem Gürtel anliegt. Diese Bandage besteht bei dem erfindungsgemäßen Fahrzeugluftreifen aus einem einzigen Gummistreifen, der mindestens ein Cord aus Verstärkungsfasern enthält, um hiermit der radiale Ausdehnung des Fahrzeugluftreifens bei hohen Geschwindigkeiten entgegenzuwirken. Der Gummistreifen ist mindestens von einem axialen Ende des Gürtels bis zu mindestens dem anderen axialen Ende des Gürtels um den Gürtel nahezu in Umfangsrichtung des Fahrzeugluftreifens gewickelt.

Bei dem erfindungsgemäßen Fahrzeugluftreifen besteht die Bandage also nur aus einem Gummistreifen, der um den Gürtel des Fahrzugluftreifens nahezu parallel zur Umfangsrichtung des Fahrzeugluftreifens gewickelt wird. Dabei ist die Wicklung mindestens über die gesamte Breite des Fahrzeugluftreifens um den Gürtel zu führen, um eine gleichmäßige Wicklung zu erreichen und über die gesamte Reifenbereite ein radiale Ausdehnung des Fahrzeugluftreifens zu verhindern. Da sich die Breite der Fahrzeugluftreifens in Achsrichtung A des Fahrzeugluftreifens erstreckt, wobei genau genommen die Breite parallel zur Rotationsachse A des Fahrzeugluftreifens liegt, weist der Fahrzeugluftreifen auch in Achsrichtung A axiale Enden auf und entsprechend auch der Gürtel des Fahrzeugluftreifens, der den Fahrzeugluftreifen in seiner radialen Richtung stabilisiert und in Umfangsrichtung verläuft. Um nun durch die Bandage den Gürtel des Fahrzeugluftreifens gleichmäßig zu stabilisieren, muss die Wicklung der Bandage mittels des Gummistreifens mindestens von einem axialen Ende des Gürtels bis zu mindestens dem anderen axialen Ende des Gürtels verlaufen, und zwar nahezu in Umfangsrichtung des Reifens.

Entsprechend ist bei einem erfindungsgemäßer Fahrzeugluftreifen die Wickelrichtung des Gummistreifens relativ zur Umfangsrichtung des Fahrzeugluftreifens so, dass das Verhältnis der Komponente der Wickelrichtung in Achsrichtung A zu der Komponente der Wickelrichtung in Umfangsrichtung entlang des Gummistreifens kleiner als 0,01 ist und über mindestens 70 % der Breite des Gürtels in Achsrichtung A um nicht mehr als 2 % variiert. Die Richtung der Wicklung des Gummistreifens hat also auch eine sehr kleine Komponente in Achsrichtung A. Dies ist allein schon deshalb notwendig, da der Gummistreifen der Bandage eine geringere Breite aufweist als der Gürtel des Fahrzeugluftreifens. Entsprechend ist der Gummistreifen in Achsrichtung versetzt mehrfach um den Gürtel zu wickeln, damit sich die Bandage von einem axialen Ende des Gürtels bis zu mindestens dem anderen axialen Ende des Gürtels erstecken kann. Entsprechend der Breite des Gummistreifens muss bereits ein Versatz durch die Komponente der Wickelrichtung des Gummistreifens in Achsrichtung A gegeben sein, der der Breite des Gummistreifens entspricht. Bei einem erfindungsgemäßen Fahrzeugluftreifens soll diese Komponente der Wickelrichtung trotzdem sehr klein sein und ihr Verhältnis zu der Komponente der Wickelrichtung im Umfangsrichtung kleiner als 0,01. Entsprechend weicht die Wickelrichtung des Gummistreifens nur so weit von der Umfangsrichtung ab, dass der Versatz nebeneinander liegender Abschnitte des Gummistreifens, die dabei nahezu in Achsrichtung A nebeneinander angeordnet sind, bei jeder Umfangsposition gerade so gegeben ist. Diese Wickelrichtung, genau genommen ihre relative Komponente in Achsrichtung A soll über mindestens 70 % der Breite des Gürtels in Achsrichtung A um nicht mehr als 2 % variieren, also in diesen Bereich in Achsrichtung nahezu konstant sein. Generell soll eigentlich über die gesamte Breite in Achsrichtung A der Gürtel mit dem Gummistreifen der Bandage gleichmäßig umwickelt sein, um jedes Größenwachstum des Reifens durch die Bandage zu unterbinden. Nur durch ein Verformen, insbesondere Umbiegen, von Gürtel und Bandage des Reifengrünlings in der Vulkanisierpresse während späteren Vulkanisierens des Fahrzeugluftreifens, bei dem der Reifen die durch die Vulkanisierform vorgegebene Form erhält, tritt oft der Fall auf, dass in den Schulterbereichen des Reifens, d.h. an den axialen Enden des Gürtels diese gleichmäßige Anordnung verändert werden kann. Daher ist es möglich, dass beim eine erfindungsgemäßen Reifen nach Abschluss seiner Fertigung nicht über die gesamte Breite das Verhältnis der Komponente der Wickelrichtung des Gummistreifens in Achsrichtung A zu der Komponente der Wickelrichtung in Umfangsrichtung nicht um mehr als 2 % im fertigen Fahrzeugluftreifen variiert, sondern nur in einer geringeren Breite des Gürtels in Achsrichtung, die aber immer mindestens 70 % der Breite ausmacht.

Ein erfindungsgemäßer Fahrzeugluftreifen weist eine derart gute Wicklung des Gummistreifens der Bandage auf, dass der Abstand der zweier benachbarter Corde in zwei nebeneinander liegender Abschnitten des Gummistreifens bei jeder Umfangsposition um nicht mehr als 5 % gegenüber dem Abstand der Corde im Gummistreifen variiert und die Corde in der Bandage dabei über mindestens 25 % der Breite des Gürtels in Achsrichtung A unter einer Spannung von mindestens 3 N/mm² stehen. Diese beiden Eigenschaften der erfindungsgemäßen Fahrzeugluftreifen sind wesentlich dafür, dass die Qualität und Sicherheit eines erfindungsgemäßen Fahrzeugluftreifens gegenüber bekannten UHP-Reifen durch eine die bessere Wicklung der Bandage um den Gürtel gesteigert wurden. Dadurch, dass auch bei zwei benachbarten Corde in zwei nebeneinander liegenden Abschnitten des Gummistreifens bei jeder Umfangsposition ihr Abstand um nicht mehr als 5 % gegenüber dem Abstand der Corde im Gummistreifen variiert, wird eine in Achsrichtung A des Fahrzeugluftreifens sehr homogene Anordnung der Corde der Verstärkungsfasern erreicht. Daher können keine lokalen Abweichungen zu einer Schwachstelle des Fahrzeugluftreifens führen, wodurch ein lokales Reifenwachstum in radialer Richtung möglich ist, das bei sehr hohen Fahrzeuggeschwindigkeiten Schwingungen oder eine zu geringe Aufstandsfläche des Reifens beim Bremsen hervorrufen kann, die die Sicherheit des Fahrzeugluftreifens in diesen kritischen Momenten beeinträchtigen. Zudem sorgt die erhöhte Spannung von mindestens 3 N/mm² in den Corden der Bandage für eine weitere Stabilität des Fahrzeugluftreifens in radialer Richtung, so dass jedes Reifenwachstum bei hohen Geschwindigkeiten und seine daraus sich ergebenden negativen Folgen weiter reduziert sind.

Diese Eigenschaften der erfindungsgemäßen Fahrzeugluftreifen werden insbesondere mit der ebenfalls beanspruchten Herstellungsanlage für Fahrzeugluftreifen und dem ebenfalls beanspruchten zugehörigen Herstellungsverfahren für Fahrzeugluftreifen erreicht.

Bei einer bevorzugten Ausführungsform des erfindungsgemäßen Fahrzeugluftreifens variiert der Abstand der zweier benachbarter Corde in zwei nebeneinander liegenden Abschnitten des Gummistreifens bei jeder Umfangsposition um nicht mehr als 2 % gegenüber dem Abstand der Corde im Gummistreifen. Besonders bevorzugt variiert dieser Abstand um nicht mehr nicht mehr als 1 % gegenüber dem Abstand der Corde im Gummistreifen und ganz besonders bevorzugt variiert dieser Abstand um nicht mehr nicht mehr als 0,5 % gegenüber dem Abstand der Corde im Gummistreifen. Durch die hierdurch noch größere Homogenität der Anordnung der Corde der Verstärkungsfasern sind die lokalen Abweichungen der stabilisierenden Bandage noch kleiner. Entsprechend ist hier die Gefahr einer Schwachstelle des Fahrzeugluftreifens, die zu einem sicherheitsrelevanten Problem führen kann, weiter reduziert.

Bei einer anderen bevorzugten Ausführungsform des erfindungsgemäßen Fahrzeugluftreifens ist das Verhältnis der Komponente der Wickelrichtung der Bandage in Achsrichtung A zu der Komponente der Wickelrichtung in Umfangsrichtung über mindestens 70 % der Breite des Gürtels in Achsrichtung A um nicht mehr als 1 % variiert, bevorzugt um nicht mehr als 0,5 % variiert und besonders bevorzugt um nicht mehr als 0,2 % variiert. Auch durch diese reduzierte Abweichung der Wickelrichtung des Gummistreifens der Bandage wird die Gefahr lokalen Abweichungen der stabilisierenden Bandage und entsprechender Schwachstellen des Fahrzeugluftreifens, die zu einem sicherheitsrelevanten Problem führen kann, weiter reduziert.

Bei einer weiteren bevorzugten Ausführungsform des erfindungsgemäßen Fahrzeugluftreifens stehen die Corde in der Bandage über mindestens 40 % der Breite des Gürtels in Achsrichtung A unter einer Spannung von mindestens 3 N/mm², bevorzugt über mindestens 60 % der Breite des Gürtels in Achsrichtung A unter einer Spannung von mindestens 3 N/mm² und besonders bevorzugt über mindestens 80 % der Breite des Gürtels in Achsrichtung A unter einer Spannung von mindestens 3 N/mm². Durch den erweiterten Bereich der Breite des Fahrzeugluftreifens, in dem die Corde unter einer erhöhten Spannung stehen, wird die Stabilität eines erfindungsgemäßen Fahrzeugluftreifens in dem erweiterten Bereich weiter erhöht, wodurch einem Reifenwachstum und seinen daraus resultierenden Folgen weiter entgegen gewirkt wird.

Bei einer anderen bevorzugten Ausführungsform des erfindungsgemäßen Fahrzeugluftreifens stehen die Corde in der Bandage über mindestens 25 % der Breite des Gürtels in Achsrichtung A , bevorzugt über mindestens 40 % der Breite des Gürtels in Achsrichtung A, besonders bevorzugt über mindestens 60 % der Breite des Gürtels in Achsrichtung A und ganz besonders bevorzugt über mindestens 80 % der Breite des Gürtels in Achsrichtung A unter einer Spannung von mindestens 12 N/mm², bevorzugt unter einer Spannung von mindestens 30 N/mm² und besonders bevorzugt unter einer Spannung von mindestens 80 N/mm². Durch die erhöhte Spannung in den Corden der Bandage sind die Fahrzeugluftreifen dieser Ausführungsform auch für sehr hohe Geschwindigkeiten, wie z.B. Rennsportgeschwindigkeiten und Extremgeschwindigkeiten geeignet, ohne dass dann Schwachstellen des Fahrzeugluftreifens zu einem sicherheitsrelevanten Problem führen. Hier agieren die Stabilisierung durch die Corde und die sehr gleichmäßige Wicklung und Anordnung der Corde konstruktiv zusammen. Auch Beanspruchungen durch sehr hohe Drehmomente eines Elektroantriebes, insbesondere im Rennsport, wie z.B. bei der Formel-E, werden die Fahrzeugreifen dieser Ausführungsformen gerecht.

**In** bestimmten dieser Ausführungsformen eines erfindungsgemäßen Fahrzeugluftreifens schwankt die Spannung, unter der die Corde in der Bandage stehen, nur unwesentlich, d.h. nur um maximal 5 %, bevorzugt nur um 1 % und bevorzugt nur um 0,3 % über 25 %, 40 %, 60 % oder 80 % der Breite des Gürtels in Achsrichtung A. Durch diese gleichmäßige Wicklung unter einer konstanten Spannung wird jegliches noch mögliches Größenwachstum des Reifens in radialer Richtung in Achsrichtung A des Fahrzeugluftreifens konstant gehalten und damit eine über die jeweilige Breite des Fahrzeugluftreifens eine nahezu optimale Aufstandsfläche des Fahrzeugluftreifens ermöglichst. Dies ist besonders vorteilhaft, wenn die gleichmäßige Wicklung in den beiden Schulterbereichen des Fahrzeugluftreifens mit einer hohen Spannung vorliegt, so dass gerade auch in diesen durch die Enden von Gürtel und Bandage eher instabilen Bereichen der Fahrzeugluftreifens optimale Aufstandsflächen nicht durch Schwachpunkte verhindert werden. Hier gleicht eine hochwertige Ausführung der Bandage den Schwachpunkt des endenden Gürtels wieder aus. Bevorzugt stehen daher die Corde der Bandage in Bereichen von mindestens 12,5 % und besonders bevorzugt 20 % der Breite des Fahrzeugluftreifens in Achsrichtung A nahe den beiden Schulterbereichen eines erfindungsgemäßen Fahrzeugluftreifens, an denen Gürtel und/oder Laufstreifen des Fahrzeugluftreifens in seine Seitenwände übergehen, unter einer erhöhten Spannung von mindestens 12 N/mm², bevorzugt von mindestens 30 N/mm² und besonders bevorzugt mindestens 80 N/mm², die in diesen Bereichen nur um maximal 5 %, bevorzugt nur um 1 % und bevorzugt nur um 0,3 % schwankt. Zwischen diesen Bereichen kann die Spannung der Corde geringer sein und/oder mehr schwanken.

In Ausführungsformen der erfindungsgemäßen Fahrzeugluftreifen ist der Gummistreifen in einer Richtung so relativ zur Umfangsrichtung des Fahrzeugluftreifens gewickelt ist, dass das Verhältnis der Komponente der Richtung in Achsrichtung A zu der Komponente der Richtung in Umfangsrichtung entlang des Gummistreifens über mindestens 85 % der Breite des Gürtels in Achsrichtung, bevorzugt die gesamte Breite des Gürtels in Achsrichtung, um nicht mehr als 2 % variiert, bevorzugt um nicht mehr als 1 % variiert, besonders bevorzugt um nicht mehr als 0,5 % variiert und ganz besonders bevorzugt um nicht mehr als 0,2 % variiert. Durch diese noch gleichmäßigere Wicklung der Bandage ist eine große Aufstandsfläche des Fahrzeugluftreifens und geringe Unregelmäßigkeiten der Lauffläche des Fahrzeugluftreifens noch besser gegeben.

In einigen Ausführungsformen des erfindungsgemäßen Fahrzeugluftreifens ist der Gummistreifen in einer Wickelrichtung relativ zur Umfangsrichtung des Fahrzeugluftreifens gewickelt, bei der ihr Verhältnis der Komponente in Achsrichtung A zu ihrer Komponente in Umfangsrichtung entlang des Gummistreifens kleiner als 0,005 ist, bevorzugt kleiner als 0,002 ist. Entsprechend sind die Corde in der Bandage des Fahrzeugluftreifens besonders genau in die Umfangsrichtung ausgerichtet, was zu einer noch besseren Stabilisierung des Fahrzeugluftreifens beträgt. Ein so kleines Verhältnis ist vor allem dann möglich, wenn die Breite gewickelten Gummistreifens nicht so groß ist und z.B. nur maximal 6 mm beträgt, bevorzugt maximal 4 mm und besonders bevorzugt maximal 3 mm beträgt bzw. die Anzahl der Corde im Gummistreifen eher klein ist, so dass nicht mehr als 6 Corde, vorzugsweise nicht mehr als 4 Corde und besonders bevorzugt nicht mehr als 2 Corde im gewickelten Gummistreifen vorhanden sind.

Erfindungsgemäße Fahrzeugluftreifen zeichnen sich insbesondere dadurch aus, dass im Bereich der optimierten Wicklung der Bandage alle Corde der Bandage sehr geordnet in Achsrichtung A nebeneinander liegen. Eine Überlappung der Corde ist ausgeschlossen. Entsprechend weisen die Corde alle die möglichst gleiche Position in radialer Richtung auf. Dementsprechend ist bei den erfindungsgemäßen Fahrzeugluftreifen der Abstand in radialer Richtung zweier Corde zweier nebeneinander liegender Abschnitte des Gummistreifens typischerweise nicht größer als 5 % des Abstands der Corde im Gummistreifen, bevorzugt nicht größer als 1 % des Abstands der Corde im Gummistreifen ist, wenn der Gummistreifen in einem bestimmten Bereich in Achsrichtung A des Fahrzeugluftreifens in einer Richtung relativ zur Umfangsrichtung des Fahrzeugluftreifens gewickelt ist, bei der das Verhältnis ihrer Komponente in Achsrichtung A zu ihrer Komponente in Umfangsrichtung kleiner als 0,01 ist und um nicht mehr als 2 % variiert.

Typischerweise besteht zwischen den Corden im Gummistreifen eines erfindungsgemäßen Fahrzeugluftreifens ein gleichmäßiger Abstand, der zwischen 0,3 mm und 2 mm beträgt, vorzugsweise zwischen 0,8 mm und 1,5 mm und besonders vorzugsweise zwischen 1 mm und 1,3 mm und dabei maximal um 3 % variiert, vorzugsweise maximal um 1,5 % variiert und besonders vorzugsweise maximal um 0,5 % variiert.

Weiterhin sind in einem Gummistreifen eines erfindungsgemäßen Fahrzeugluftreifens typischerweise 2 bis 15 Corde nebeneinander angeordnet, vorzugsweise 4 bis 12 Corde und besonders vorzugsweise 7 bis 10 Corde.

Üblicherweise besteht der mindestens eine im Gummistreifen eines erfindungsgemäßen Fahrzeugluftreifens enthaltene Cord aus Nylonfasern, Aramidfasern, Polyesterfasern oder Rayonfasern.

Bevorzugt besteht der mindestens eine im Gummistreifen eines erfindungsgemäßen Fahrzeugluftreifens enthaltene Cord aus 100 - 300 Nylonfasern oder 700 - 1300 Aramidfasern, wobei bevorzugt die Fasern als 2 bis 5 Garne der Fasern in einem Cord vorliegen, die im Cord verdreht, verdrillt oder verflochten sind.

Typischerweise weist das Gummimaterial des Gummistreifens eines erfindungsgemäßen Fahrzeugluftreifens Ruß als Füllstoff auf. Üblicherweise ist das Gummimaterial des Gummistreifens eines erfindungsgemäßen Fahrzeugluftreifens ein isotropes Material. Zumeist handelt es bei dem Gummimaterial um eine Ummantelung der Corde, die z.B. als Beschichtung aufgebracht wurde.

Bevorzugt wird der Gummistreifen eines erfindungsgemäßen Fahrzeugluftreifens noch über die axialen Enden des Gürtels hinaus in Achsrichtung A gewickelt, typischerweise noch über 5 % der Breite der Gürtels in Achsrichtung A über das Gürtelende hinaus, bevorzugt noch über 10 % der Breite der Gürtels in Achsrichtung A über das Gürtelende hinaus. Hiermit wird sichergestellt, dass die Stabilisierung des Gürtels durch die Bandage wirklich über den ganzen Gürtel erfolgt und insbesondere über seine seitlichen Enden hinaus. Auch durch diese Maßnahme wird einer möglichen Schwachstelle eines Fahrzeugluftreifens im Schulterbereich entgegengewirkt.

**In** bevorzugten Ausführungsformen des erfindungsgemäßen Fahrzeugluftreifens kann der gewickelte Gummistreifen der Bandage an mindestens einem seiner axialen Enden noch eine weitere Wicklung aufweisen, die zumindest teilweise die gleiche Position in Achsrichtung A aufweist wie eine weitere Wicklung des Gummistreifens. Es wird dann am Ende des gewickelten Gummistreifens noch einmal bewusst eine zweite Wicklung des Gummistreifens zumindest teilweise über eine erste Wicklung des Gummistreifens gelegt, um hierdurch den gewickelten Gummistreifen an seinem axialen Ende gegen ein Verrutschen besser zu befestigen. Der Bereich, in dem diese weitere Wicklung des Gummistreifens vorliegt, gehört dann nicht zu den mindestens 70 % der Breite des Gürtels in Achsrichtung A mit der optimierten Wicklung des Gummistreifens, in dem das Verhältnis der Komponente der Wickelrichtung des Gummistreifens in Achsrichtung A zu der Komponente der Wickelrichtung des Gummistreifens in Umfangsrichtung entlang des Gummistreifens kleiner als 0,01 ist und um nicht mehr als 2 % variiert und wobei der Abstand zweier benachbarter Corde in zwei nebeneinander liegender Abschnitten des Gummistreifens bei jeder Umfangsposition um nicht mehr als 5 % gegenüber dem Abstand der Corde im Gummistreifen variiert.

Der Gürtel der erfindungsgemäßen Fahrzeugluftreifen kann nur aus einer über den Reifenumfang umlaufenden Stahlcordgürtellage bestehen, wobei die Richtung der Stahlcorde nicht mehr als 3 ° von der Umfangsrichtung des Fahrzeugluftreifens abweicht, bevorzugt nicht mehr als 1 ° von der Umfangsrichtung und besonders bevorzugt nicht mehr als 0,3 ° von der Umfangsrichtung.

Der Gürtel der erfindungsgemäßen Fahrzeugluftreifen kann aus zwei über den Reifenumfang umlaufenden Stahlcordgürtellagen bestehen, wobei die Richtung der Stahlcorde in beiden Gürtellagen von der Umfangsrichtung des Fahrzeugluftreifens bei beiden Stahlcordgürtellagen bis auf höchstens 2 °, bevorzugt höchstens 0,5 ° um den gleichen Winkel abweicht, die Richtung der Stahlcorde bezogen auf die Achsrichtung A jedoch bei beiden Gürtellagen in die entgegengesetzte Richtung weist. Die Stahlcorde beider Gürtellagen sind dann nahezu symmetrisch zur Umfangsrichtung des Fahrzeugluftreifens angeordnet mit einer Hauptkomponente im Umfangsrichtung. Typischerweise weicht die Richtung der Stahlcorde dabei um einen Winkel von 0 ° bis 45 ° von der Umfangsrichtung ab. Bevorzugt sind jedoch Gürtel, bei denen die Richtung der Stahlcorde um einen Winkel von 22 ° bis 36 ° von der Umfangsrichtung abweicht.

Gelöst wird die Aufgabe auch durch Herstellungsverfahren gemäß Patentanspruch 6.

Es handelt sich hierbei um ein Verfahren zur Herstellung eines Fahrzeugluftreifens mit einem Gürtel bestehend aus mindestens einer über den Reifenumfang umlaufenden Stahlcordgürtellage und einer Bandage, die über den gesamten Reifenumfang radial außen an dem Gürtel anliegt, bei dem in einem Herstellungsschritt die Bandage, die aus einem Gummistreifen besteht, in dem zwei bis sechs Corde aus Verstärkungskomponenten enthalten sind, außen auf den Gürtel gewickelt wird, der auf einer drehbaren Trommel positioniert ist, wobei der Gummistreifen mittels eines Zuführungseinrichtung der Trommel zugeführt wird, der Gummistreifen mittels einer Andrückeinrichtung während des Aufwickelns an die Außenseite des Gürtels gedrückt wird und der zugeführte Gummistreifen durch die Rotation der drehbaren Trommel aufgewickelt wird, wobei sich die axiale Position des Zuführungskopfes während des Aufwickelns gleichmäßig mindestens von dem einen axialen Ende des Gürtels zum anderen bewegt,
wobei der Gummistreifen durch eine Bewegung der Zuführungseinrichtung entlang einer zur Achsrichtung A der drehbaren Trommel parallelen Bewegungsachse Az in einer Wickelrichtung relativ zur Umfangsrichtung der drehbaren Trommel gewickelt, bei der das Verhältnis ihrer Komponente in Achsrichtung A der drehbaren Trommel zu der Komponente ihrer Richtung in der Umfangsrichtung kleiner als 0,01 ist und über mindestens 85 % der Breite des Gürtels in Achsrichtung A um nicht mehr als 2 % variiert,
wobei durch die Rotation der drehbaren Trommel beim Wickeln der Bandage um den Gürtel der Gummistreifen der Bandage über mindestens 25 % der Breite des Gürtels in Achsrichtung unter einer Zugkraft von 10 N bis 200 N, vorzugsweise unter einer Zugkraft von 50 N bis 150 N und besonders bevorzugt unter einer Zugkraft von 80 N bis 120 N gewickelt wird.

Bevorzugt variiert hierbei das Verhältnis der Komponente der Wickelrichtung in Achsrichtung A zu der Komponente der Wickelrichtung in Umfangsrichtung entlang des Gummistreifens über mindestens 85 % der Breite des Gürtels in Achsrichtung A um nicht mehr als 1 %, besonders bevorzugt um nicht mehr als 0,5 % und ganz besonders bevorzugt um nicht mehr als 0,2 %.

Mit einem derartigen Verfahren können insbesondere die erfindungsgemäßen Fahrzeugluftreifen hergestellt werden.

Ein erfindungsgemäßes Verfahren dient zur Herstellung eines Fahrzeugluftreifens, der einen Gürtel aufweist, der aus mindestens einer über den Reifenumfang umlaufenden Stahlcordgürtellage besteht, und einer Bandage, die über den gesamten Reifenumfang radial außen an dem Gürtel anliegt.

Ein erfindungsgemäßes Herstellungsverfahren weist neben anderen üblichen Schritten der Herstellung eines Fahrzeugluftreifens einem Herstellungsschritt auf, bei dem eine Bandage außen auf den Gürtel gewickelt wird. Hierbei besteht die Bandage aus nur einem Gummistreifen, in dem mindestens ein Cord aus Verstärkungsfasern enthalten ist. Ein derartigen Gummistreifen kann natürlich auch mehrere in einer Richtung nebeneinander angeordnete Corde aufweisen, die dann zueinander in der Richtung bis auf gewisse Toleranzen den gleichen Abstand aufweisen. Dabei verläuft diese Richtung senkrecht zur Längsrichtung des Gummistreifens und die Corde erstecken sich in Längsrichtung des Gummistreifens. Entsprechend hat eine Gummisteifen eine sehr große Länge, in deren Richtung seine Corde verlaufen, ein Breite, in deren Richtung die Corde nebeneinander angeordnet sind und eine zumeist geringe Höhe, die durch den Durchmesser der Corde und das ihn umgebende Gummimaterial gegeben ist, welches oft einfach seine Gummiummantelung ist.

Vor dem Herstellungsschritt der Bandagenwicklung wurde der Gürtel vorher auf einer drehbaren Trommel positioniert ist. Der Gummistreifen wird während des Herstellungsschritts mittels eines Zuführungseinrichtung der Trommel zugeführt. Der zugeführte Gummistreifen wird durch die Rotation der drehbaren Trommel aufgewickelt, und zwar auf dem Gürtel, der auf der drehbaren Trommel positioniert ist. Dabei bewegt sich die axiale Position des Zuführungskopfes während des Aufwickelns gleichmäßig mindestens von dem einen axialen Ende des Gürtels zum anderen. Zudem wird während des Aufwickelns der Gummistreifen mittels einer Andrückeinrichtung an die Außenseite des Gürtels gedrückt.

Wesentlich an den erfindungsgemäßen Verfahren ist, dass der Gummistreifen während seines Aufwickelns zusätzlich mittels der Andrückvorrichtung an den sich auf der drehbaren Trommel befindlichen Gürtel angedrückt wird.

Durch dieses Andrücken des aufgewickelten Gummistreifens wird verhindert, dass der Gummistreifen sich aus seiner Position auf dem Gürtel bewegen kann. Entsprechend sorgt die Andrückrolle dafür, dass ein einmal gut aufgewickelter Gummistreifen bis zum Ende des Wickelprozesses der Bandage in seiner Position bleibt. Damit werden lokalen Abweichungen der Wicklung der Bandage verhindert, die letztendlich zu Schwachstelle des fertigen Fahrzeugluftreifens führen können, die bei hohen und sehr hohen Fahrzeuggeschwindigkeiten zu Schwingungen oder einer zu geringe Aufstandsfläche des Reifens beim Bremsen führen können. Insbesondere bei UHP-Reifen trägt daher der verbesserte Wickelprozess in der erfindungsgemäßen Anlage zur Qualität und Sicherheit bei.

Genau wie bei der erfindungsgemäßen Herstellungsanlagen gibt es auch bei den erfindungsgemäßen Herstellungsverfahren bevorzugte Ausführungsformen, die den Herstellungsprozess weiter verbessern, um so noch bessere Fahrzeugluftreifen herzustellen. Die jeweiligen Verbesserungen sind bei den sich entsprechenden Herstellungsanlagen und Herstellungsverfahren gleich. Sie werden daher im Zuge der Herstellungsverfahren nicht mehr explizit erwähnt und es wird hierzu vielmehr jeweils auf die entsprechende Ausführungsform einer Herstellungsanlage verwiesen, mit der eine Ausführungsform des Herstellungsverfahrens ausgeführt werden kann.

Bei einer Ausführungsform des erfindungsgemäßen Herstellungsverfahrens wird der Gummistreifen durch eine Bewegung der Zuführungseinrichtung entlang einer zur Achsrichtung A der drehbaren Trommel parallelen Bewegungsachse Az in einer Wickelrichtung relativ zur Umfangsrichtung der drehbaren Trommel gewickelt, bei der das Verhältnis ihrer Komponente in Achsrichtung A zu ihrer Komponente in Umfangsrichtung über mindestens 95 % der Breite des Gürtels in Achsrichtung A kleiner als 0,01 ist, bevorzugt die gesamte Breite des Gürtels in Achsrichtung, und um nicht mehr als 2 % variiert, bevorzugt um nicht mehr als 1 % variiert, besonders bevorzugt um nicht mehr als 0,5 % variiert und ganz besonders bevorzugt um nicht mehr als 0,2 % variiert.

Bei einer anderen Ausführungsform des erfindungsgemäßen Herstellungsverfahrens wird durch die Bewegung der Zuführungseinrichtung, die Rotation der drehbaren Trommel und das Andrücken der Andrückeinrichtung der Gummistreifen so aufgewickelt wird, dass der Abstand der zweier benachbarter Corde in zwei nebeneinander liegender Abschnitten des gewickelten Gummistreifens bei jeder Umfangsposition um nicht mehr als 5 % gegenüber dem Abstand der Corde im Gummistreifen variiert. Ausgenommen hiervon ist lediglich eine zuvor beschriebene letzte Wicklung des Gummistreifens an seinen Enden, die seiner Befestigung dient. Bevorzugt variiert der Abstand zweier benachbarter Corde dann in zwei nebeneinander liegender Abschnitten des gewickelten Gummistreifens bei jeder Umfangsposition um nicht mehr als 2 % gegenüber dem Abstand der Corde im Gummistreifen, besonders bevorzugt um nicht mehr nicht mehr als 1 % gegenüber dem Abstand der Corde im Gummistreifen und ganz besonders bevorzugt um nicht mehr nicht mehr als 0,5 % gegenüber dem Abstand der Corde im Gummistreifen.

In Ausführungsformen des erfindungsgemäßen Herstellungsverfahrens kann die Zugkraft, unter der der Gummistreifen gewickelt wird, über die mindestens 60 % der Breite des Gürtels in Achsrichtung A um 10 N bis 140 N variieren, bevorzugt um 50 N bis 80 N.

In einer Ausführungsform des erfindungsgemäßen Herstellungsverfahrens wird der Gummistreifen in dem Bereich des Gürtels unter einer Zugkraft von 50 N bis 200 N um den Gürtel gewickelt wird, der von einem axialen Ende des Gürtels bis zu einem Bereich des Gürtels reicht, der in Achsrichtung A einen Abstand von diesem axialen Ende des Gürtels von mindestens 10 % der Breite des Gürtels in Achsrichtung A aufweist, bevorzugt der in Achsrichtung A einen Abstand von mindestens 20 % der Breite des Gürtels in Achsrichtung A aufweist und besonders bevorzugt der in Achsrichtung A einen Abstand von 25 % bis 30 % der Breite des Gürtels in Achsrichtung A aufweist.

Wenn der Gummistreifen in den zuvor genannten Ausführungsbeispielen unter einer Zugkraft gewickelt wird, so schwankt diese bevorzugt nur um maximal 5 %, besonders bevorzugt nur um 1 % und ganz besonders bevorzugt nur um 0,3 %.

Bevorzugt wird der Gummistreifen bei den zuvor genannten Ausführungsformen des erfindungsgemäßen Herstellungsverfahrens durch eine Bewegung der Zuführungseinrichtung entlang einer zur Achsrichtung A der drehbaren Trommel parallelen Bewegungsachse Az in einer Wickelrichtung relativ zur Umfangsrichtung der drehbaren Trommel gewickelt, bei der das Verhältnis ihrer Komponente in Achsrichtung A zu ihrer Komponente der Richtung in Umfangsrichtung kleiner als 0,005 ist und insbesondere kleiner als 0,002 ist.

In bevorzugten Ausführungsformen des erfindungsgemäßen Herstellungsverfahrens wird durch die Bewegung der Zuführungseinrichtung zu der drehbaren Trommel der Gummistreifen so gewickelt und durch die Andrückeinrichtung so auf dem Gürtel positioniert, dass der Abstand in radialer Richtung zweier Corde zweier nebeneinander liegender Abschnitte des Gummistreifens nicht größer als 5 % des Abstands der Corde im Gummistreifen ist, bevorzugt nicht größer als 1 % des Abstands der Corde im Gummistreifen ist. Ausgenommen hiervon ist lediglich eine zuvor beschriebene letzte Wicklung des Gummistreifens an seinen Enden, die seiner Befestigung dient.

Typischerweise sind in dem Gummistreifen, der in den erfindungsgemäßen Herstellungsverfahren auf dem Gürtel gewickelt wird, 2 bis 15 Corde nebeneinander angeordnet, vorzugsweise 4 bis 12 Corde und besonders vorzugsweise 7 bis 10 Corde.

Zwischen den Corden in einem Gummistreifen, der in den erfindungsgemäßen Herstellungsverfahren auf dem Gürtel gewickelt wird, besteht ein gleichmäßiger Abstand, der typischerweise zwischen 0,3 mm und 2 mm beträgt, vorzugsweise zwischen 0,8 mm und 1, 5 mm und besonders vorzugsweise zwischen 1 mm und 1,3 mm und dabei maximal um 3 % variiert, vorzugsweise maximal um 1,5 % variiert und besonders vorzugsweise maximal um 0,5 % variiert.

Bei einem Gummistreifen, mit einem erfindungsgemäßen Herstellungsverfahren auf dem Gürtel gewickelt wird, besteht der mindestens eine in dem Gummistreifen enthaltene Cord üblicherweise aus Nylonfasern, Aramidfasern, Polyesterfasern oder Rayonfasern.

Insbesondere kann der mindestens eine im Gummistreifen enthaltene Cord aus 100 - 300 Nylonfasern oder 700 - 1300 Aramidfasern bestehen, wobei bevorzugt die Fasern als 2 bis 5 Garne der Fasern einem Cord vorliegen, die im Cord verdreht, verdrillt oder verflochten sind.

In einigen Ausführungsformen des erfindungsgemäßen Herstellungsverfahrens werden die Zuführungseinrichtung und drehbare Trommel beim Wickeln der Bandage so zueinander bewegt, dass der Gummistreifen über mindestens eines der axialen Enden des Gürtels hinaus in Achsrichtung A der drehbaren Trommel noch über 5 % der Breite der Gürtels in Achsrichtung A der drehbaren Trommel gewickelt wird, bevorzugt noch über 10 % der Breite der Gürtels.

In anderen Ausführungsformen des erfindungsgemäßen Herstellungsverfahrens werden die Zuführungseinrichtung und drehbare Trommel beim Wickeln der Bandage so zueinander bewegt, dass der Gummistreifen an mindestens einem seiner axialen Enden noch ein weiteres Mal zusätzlich gewickelt wird, so dass diese Wicklung und eine weitere seiner Wicklungen zumindest teilweise die gleiche Position in Achsrichtung A aufweisen.

Gürtel, auf denen die Bandage mit einem erfindungsgemäßen Herstellungsverfahren gewickelt wird, können nur aus einer über den Reifenumfang umlaufenden Stahlcordgürtellage bestehen, wobei die Richtung der Stahlcorde nicht mehr als 3 ° von der Umfangsrichtung der drehbaren Trommel abweicht, wenn der Gürtel auf der drehbaren Trommel positioniert wird, bevorzugt nicht mehr als 1 ° von der Umfangsrichtung und besonders bevorzugt nicht mehr als 0,3 ° von der Umfangsrichtung.

Gürtel, auf denen die Bandage mit einem erfindungsgemäßen Herstellungsverfahren gewickelt wird, können aus zwei über den Reifenumfang umlaufenden Stahlcordgürtellagen bestehen, wobei die Richtung der Stahlcorde in beiden Gürtellagen von der Umfangsrichtung der drehbaren Trommel bei beiden Stahlcordgürtellagen bis auf höchstens 2 °, bevorzugt höchstens 0,5 ° um den gleichen Winkel abweicht und die Richtung der Stahlcorde bezogen auf die Achsrichtung A der drehbaren Trommel bei beiden Gürtellagen in die entgegengesetzte Richtung weist, wenn der Gürtel auf der drehbaren Trommel positioniert wird. Die Stahlcorde beider Gürtellagen sind dabei nahezu symmetrisch zur Umfangsrichtung der drehbaren Trommel angeordnet mit einer Hauptkomponente im Umfangsrichtung. Typischerweise weicht die Richtung der Stahlcorde um einen Winkel von 0 ° und 45 ° von der Umfangsrichtung ab. Bevorzugt sind jedoch Gürtel, bei denen die Richtung der Stahlcorde um einen Winkel von 22 ° und 36 ° von der Umfangsrichtung abweicht.

Typischerweise wird in den erfindungsgemäßen Herstellungsverfahren als Andrückeinrichtung, die den Gummistreifen während des Aufwickelns an die Außenseite des Gürtels drückt, eine Andrückrolle verwendet, die bevorzugt aus einem Polymerwerkstoff besteht.

Die Andrückeinrichtung, insbesondere wenn es sich um eine Andrückrolle handelt, drückt typischerweise bei einem erfindungsgemäßen Herstellungsverfahren während des Herstellungsschritts des Wickelns der Bandage um den Gürtel den Gummistreifen mit einer Druck von 0,15 N/mm² bis 1 N/mm², bevorzugt einem Druck von 0,18 N/mm² bis 0,4 N/mm² und besonders bevorzugt einem Druck von 0,2 N/mm² bis 0,3 N/mm² an die Außenseite des Gürtels.

Alle in dieser Beschreibung wiedergegebenen Ausführungsformen der erfindungsgemäßen Fahrzeugluftreifen, Herstellungsanlagen und Herstellungsanlagen stellen lediglich Beispiele der Ausgestaltung der Erfindung dar. Entsprechend sind auch durch einzelne oder mehrere Merkmale einer Ausführungsform alleine oder die Kombination der Merkmale verschiedene Ausführungsformen weitere Ausführungsformen der Erfindung gegeben, die Gegenstand der Erfindung sind, soweit diese nicht explizit anders in der Beschreibung erläutert wird.

### Kurzbeschreibung der Zeichnungen

Anhand mehrerer Ausführungsbeispiele soll die Erfindung näher erläutert werden. Es zeigen:
- Fig. 1:: Erfindungsgemäße Anlage zum Wickeln einer Bandage auf einem Gürtel, Sicht in Richtung der Rotationsachse A
- Fig. 2:: Erfindungsgemäße Anlage zum Wickeln einer Bandage auf einem Gürtel, Sichtebene parallel zur Rotationsachse A
- Fig. 3:: Bild einer gewickelten Bandage als Abwicklung in der Umfangsfläche und Querschnitt parallel zur Rotationsachse A
- Fig. 4:: Querschnitt eines fertigen Fahrzeugluftreifens gemäß dem Stand der Technik mit Wickelfehler
- Fig. 5:: Querschnitt aus eines erfindungsgemäßen Fahrzeugluftreifens
- Fig 6:: Zugkraftverteilung in Achsrichtung der Rotationsachse A einer gleichmäßig gewickelten Bandage
- Fig 7:: Zugkraftverteilung in Achsrichtung der Rotationsachse A eines im Randbereich des Gürtels mit höheren Zugkräften gewickelten Bandage

### Ausführliche Beschreibung der Erfindung

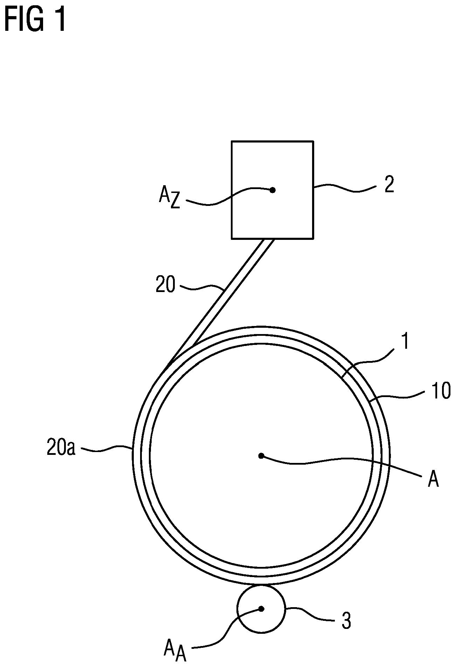

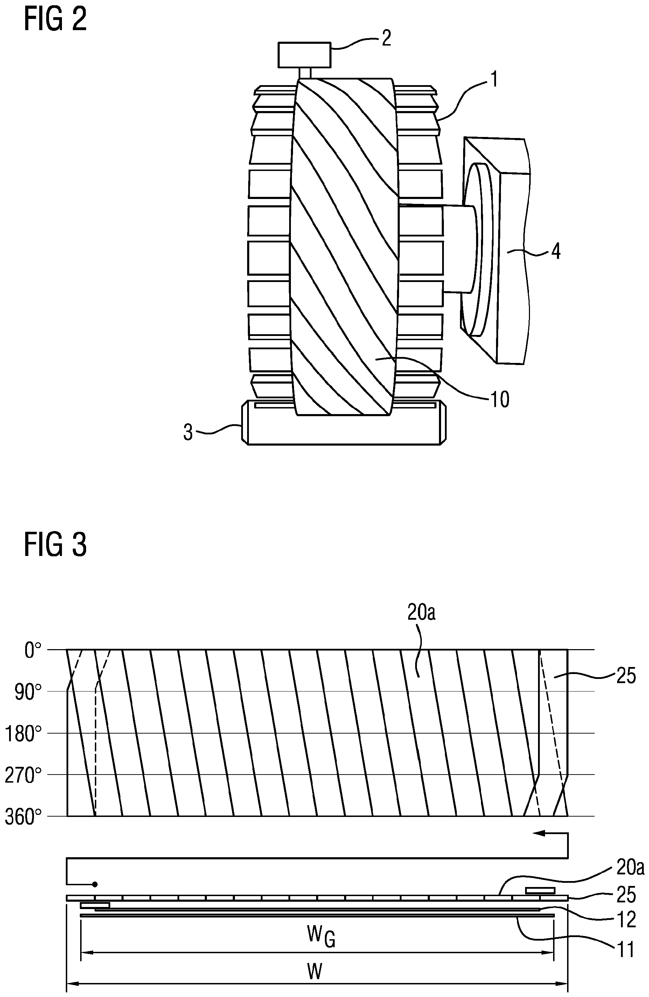

In den Figuren 1 und 2 ist schematisch eine erfindungsgemäße Anlage zur Herstellung eines Fahrzeugluftreifens gezeigt, bei dem eine Bandage um einen Gürtel 10 eines Fahrzeugluftreifens gewickelt wird. Ein Fahrzeugluftreifen, der mit einer derartigen Anlage gefertigt wird, weist einen Gürtel auf, der aus mindestens einer Lage von Stahlcorden besteht, die von einem Gummimaterial umgeben sind, einer Stahlcordgürtellage. Bei der gezeigten erfinderischen Anlage und im zugehörigen erfindungsgemäßen Herstellungsverfahren wird der Gürtel 10 um eine drehbare Trommel 1 gewickelt. Diese drehbare Trommel 1 rotiert dabei um ihre Rotationsachse A, die Achsrichtung der Trommel. Angetrieben wird die drehbare Trommel 1 durch einen in der Figur 2 gezeigten Antrieb 4. Dieser Antrieb 4 überträgt über eine Rotationswelle eine Rotation auf die Trommel 1. Neben dem Gürtel 10 weist ein Fahrzeugluftreifen, der auf einer erfindungsgemäßen Anlage gefertigt werden soll, auch eine Bandage auf. Diese Bandage liegt radial außen an dem Gürtel 10 an. Der Gürtel 10 des Fahrzeugluftreifens ist über den gesamten Reifenumfang des Fahrzeugluftreifens umlaufend. Entsprechend ist dies auch die Bandage. Der Fahrzeugluftreifen, der mit der erfindungsgemäßen Anlage hergestellt wird, weist eine Bandage auf, die aus einem einzigen Gummistreifen 20 besteht. In dem erfindungsgemäßen Herstellungsschritt des Herstellungsverfahrens wird nun dieser Gummistreifen 20 um den Gürtel 10 gewickelt. In Figur 1 ist der bereits gewickelte Gummistreifen 20 a gezeigt. Allerdings ist dieser Gummistreifen in der Figur 1 nur teilweise gewickelt. Gezeigt ist in der Herstellungsanlage weiterhin ein Zuführungskopf 2. Über diesen Zuführungskopf 2 wird der Gummistreifen 20 der drehbaren Trommel 1 zugeführt. Dabei wird der Gummistreifen 20 vom Zuführungskopf 2 in Richtung der drehbaren Trommel 1 gespult. Erreicht der Beginn des Gummistreifens 20 die drehbare Trommel 1 zu Beginn des Wickelprozesses, so haftet der Gummistreifen 20 auf dem Gürtel 10. Dies ist bedingt durch die verschiedenen Gummimaterialien, aus denen Gürtel und Gummistreifen bestehen. Wesentlich ist, dass sowohl im Gürtel 10, als auch im Gummistreifen 20 Verstärkungscorde eingelassen sind. Hierbei bestehen die Corde des Gürtels 10 aus Stahlcorden 14. Diese Corde sind dann mit einem Gummimaterial beschichtet, um eine Stahlcordgürtellage oder mehrere Stahlcordgürtellagen 11 und 12 zu bilden. Im Gummistreifen befindet sich dagegen mindestens ein Cord 24 aus Verstärkungsfasern. Dadurch, dass die drehbare Trommel 1 beim Auftreffen des Gummistreifens 20 in Rotation versetzt wird, wird der Gummistreifen 20 auf den Gürtel 10 aufgewickelt, der sich bereits auf der Trommel befindet. Bei dieser aus dem Stand der Technik bekannten Technologie gibt es jedoch das Problem, dass der gewickelte Gummistreifen 20 a sich aus seiner Position während des weiteren Wickelvorganges bewegen kann und dadurch die durch die Position des Zuführungskopfes vorgegebene Wickelung nicht mehr exakt vorhanden ist. Wie bereits zuvor beschrieben, führt eine Verschiebung des gewickelten Gummistreifens 20 a zu Schwachstellen in den nach weiteren bekannten Verfahrensschritten fertig gestellten Fahrzeugluftreifen, die sich insbesondere bei hohen Fahrzeuggeschwindigkeiten sehr negativ auswirken. Um die Position des gewickelten Gummistreifens 20 a nun während des Wickelvorganges zu gewährleisten, wird in der erfindungsgemäßen Herstellungsanlage eine Andrückeinrichtung benutzt, durch die der Gummistreifen 20 a der Bandage an dem auf der Trommel positionierten Gürtel 10 gedrückt wird. In dem gezeigten Ausführungsbeispiel handelt es sich bei der Andruckeinrichtung um eine Andrückrolle 3. In Figur 1 ist auch die Rotationachse A_{A} der Andrückrolle 3 gezeigt. Die Rotationsachse A_{A} der Andrückrolle 3 und die Rotationsachse A der drehbaren Trommel 1 verlaufen dabei parallel. Die Andrückrolle 3 übt auf den aufgewickelten Gummistreifen 20 a einen gewissen Druck aus, der typischerweise zwischen 0,15 N/cm² und 0,4 N/cm² liegt. Insbesondere wird von der Andrückrolle 3 zur Fertigung oft ein Druck von 0,2 N/mm² bis 0,3 N/mm² auf den bereits gewickelten Gummistreifen 20 a ausgeübt. In der Figur 3 ist ein typisches Wickelbild gezeigt, wie eine Bandage auf der Oberfläche des Gürtels 10 gewickelt wird. Gezeigt ist hierbei die gesamte Umfangsfläche des Gürtels 10, in dem diese Fläche auf eine zweidimensionale Fläche abgewickelt wurde. Man sieht daher in der Horizontalen die Ausdehnung der Gürtelfläche in Richtung der Rotationsachse A der drehbaren Trommel 1 und in vertikaler Richtung die Umfangsrichtung des Gürtels 10 skaliert in Winkeln. Unter dieser zweidimensionalen Darstellung befindet sich weiter ein Schaubild, dass lediglich die Positionierung des Gürtels 10 und des aufgewickelten Gummistreifens 20 a zur Rotationsachse der drehbaren Trommel 1 veranschaulicht. Die genaue Lage in radialer Richtung der Trommel 1 ist nicht dargestellt. Man erkennt, dass der Gürtel 10 aus einer ersten Stahlcordgürtellage 11 und einer zweiten Stahlcordgürtellage 12 besteht. Weiter erkennt man aus der Darstellung der Figur 3, dass die Wickelung des Gummistreifens 20 in axialer Richtung über die axialen Enden des Gürtels 10 hinaus erstreckt. Aus diesem Wickelbild ist zu entnehmen, wie der Gummistreifen 20 als gewickelter Gummistreifen 20 a auf dem Gürtel 10 anzuordnen ist, damit der später mit diesem Verbund von Gürtel 10 und Bandage gefertigte Fahrzeugluftreifen als UHP-Reifen für sehr hohe Geschwindigkeiten geeignet ist. Mit dem gezeigten Verfahren kann ein mit dieser Anwendung beanspruchter erfindungsgemäßer Fahrzeugluftreifen gefertigt werden mit einer Qualität, die bisher noch nicht möglich war. Der in dem Ausführungsbeispiel gezeigte gewickelte Gummistreifen 20 a hat eine Breite von 10 mm und weist 9 in der Breite des Gummistreifens nebeneinander angeordnete Corde aus Nylon auf, die ein Durchmesser von 0,7 mm aufweisen. Die Corde in dem Gummistreifen 20 weisen entsprechend einen Cordabstand von 1,111 mm auf. Typischerweise werden derartige Gummistreifen gefertigt, in dem die Corde mit einer Gummibeschichtung versehen werden und dann parallel zueinander angeordnet werden. Dabei sind die Corde in dem Gummistreifen so positioniert, dass zwei nebeneinander angeordnete Abschnitte des Gummistreifens dann auch einen Cordabstand aufweisen zwischen dem benachbarten Corden beider Abschnitte, der dem Cordabstand im Gummistreifen 20 ansonsten entspricht.

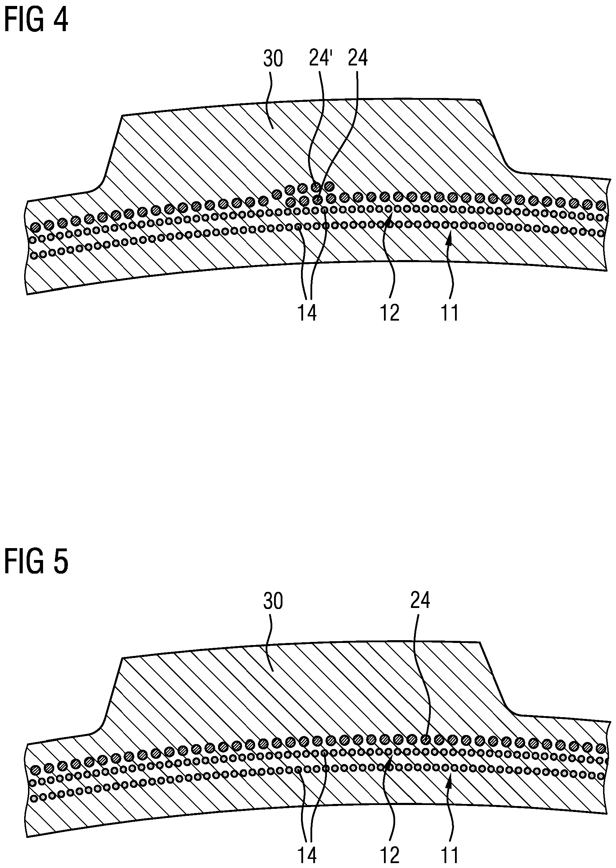

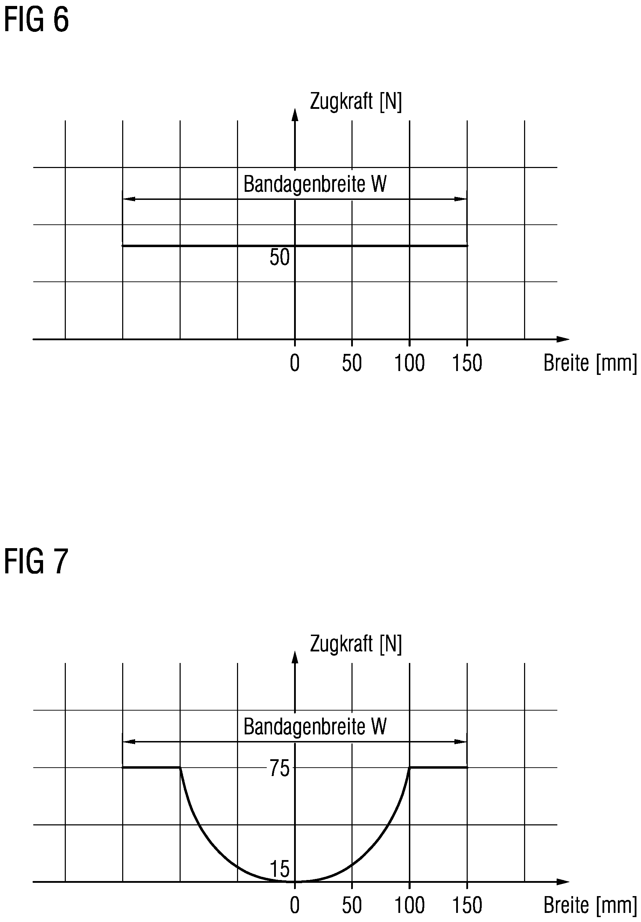

Während des Wickelprozesses in der erfindungsgemäßen Wickelanlage fährt zunächst der Zuführungskopf 2, der, wie in Figur 1 gezeigt, entlang einer Achse Az, die zur Achse A der drehbaren Trommel parallel verläuft, beweglich ist an das eine Ende des Gürtels in axialer Richtung und positioniert zunächst den Gummistreifen 20 auf dem Gürtel 10, der auf der drehbaren Trommel 1 positioniert ist. Zunächst wird als Sicherungsmaßnahme für den gewickelten Gummistreifen 20 a der Gummistreifen 20 über einen Umfang direkt in Umfangsrichtung der drehbaren Trommel 1 und damit des Gürtels 10 gewickelt. Für diese Wicklung wird die drehbare Trommel 1 durch den Antrieb 4 in Bewegung gesetzt. Nach dieser ersten Umdrehung, bei der sich der gewickelte Gummistreifen 20 a in Achsrichtung in einer Position befindet, die über das axiale Ende des Gürtels 10 hinaus ragt, setzt sich der Zuführungskopf 2 entlang der Richtung der Achse Az in Bewegung. Durch diese Bewegung des Zuführungskopfes 2 wird der Gummistreifen 20 dann nicht mehr direkt in Umfangsrichtung der drehbaren Trommel 1 gewickelt, sondern in einer gering davon abweichenden Wickelrichtung. Hierbei ist die Wickelrichtung so gewählt, dass mit jeder Umdrehung der drehbaren Trommel 1 sich der Zuführungskopf 2 um die Breite des Gummistreifens 20 a in Richtung des anderen Endes in axialer Richtung des Gürtels 10 bewegt. Bei dem Ausführungsbeispiel bewegt sich daher der Zuführungskopf 2 bei einer Umdrehung der drehbaren Trommel 1 um 10 mm in Richtung des anderen Endes des Gürtels 10. Wie aus Figur 3 und dem dort gezeigten Wickelbild zu erkennen ist, wird durch diese Art der Wicklung jeweils ein Abschnitt des Gummistreifens genau neben den nach einer Umdrehung vorliegenden Abschnitt des Gummistreifens gelegt, so dass über die gesamte Breite W_{G} (Gürtelbreite) des Gürtels 10 in Achsrichtung A zwischen den benachbarten Abschnitten des Gummistreifens möglichst keine Lücke und auch keine Überlappung vorliegt. Eine zulässige Lücke zwischen benachbarten Abschnitten des gewickeltes Gummistreifens 20 A beträgt weniger als 0,05 mm, bevorzugt weniger als 0,02 mm und besonders bevorzugt weniger als 0,01 mm. Insbesondere erfolgt die Wicklung des Gummistreifens 20 durch den Zuführungskopf 2 derart, dass die Bewegung des Zuführungskopfes 2 zur drehbaren Trommel 1 über die gesamte Bandagenbreite W derart ist, dass zwei Corde, die sich in zwei nebeneinanderliegenden Abschnitten des gewickelten Gummistreifens 20 a befinden und durch Randstellung im Gummistreifen 20 zueinander benachbart sind, nahezu den gleichen Abstand aufweisen, wie die Corde im Gummistreifen 20 selbst. Dabei weicht der Abstand dieser benachbarten Corde in benachbarten Abschnitten des Gummistreifens 20 a um nicht mehr als 5 % vom üblichen Abstand der Corde im Gummistreifen 20 ab. Um eine derart genaue Wicklung des gewickelten Gummistreifens 20 a und der in ihm enthaltenen Corde 24 zu erreichen, ist es notwendig, eine jegliche Bewegung des Gummistreifens 20 a nach seiner Wicklung zu unterbinden. Um dies sicherzustellen, weist die erfindungsgemäße Herstellungsanlage eines Fahrzeugluftreifens, die dem Wickelprozess der Bandage ausführt, zusätzlich die Andrückrolle 3 auf. Diese Andrückrolle 3, die um die Rotationsachse A_{A} rotiert, die parallel zur Rotationsachse A der drehbaren Trommel 1 gelegen ist, rotiert während der Drehung der Trommel 1 mit. Sie übt hierbei einen gewissen Druck auf den bereits gewickelten Gummistreifen 20 a aus, der so groß ist, dass ein Verrutschen des gewickelten Gummistreifens 20 a nicht mehr möglich ist. Der von der Andrückrolle 3, die typischerweise aus einem Polymerwerkstoff, also einem Kunststoff, besteht, auf den gewickelten Gummistreifen 20 a ausgeübte Druck liegt typischerweise zwischen 0,15 N/mm² bis 1 N/mm². Bevorzugt werden insbesondere von der Andrückrolle 3 Drücke zwischen 0,2 N/mm² bis 0,3 N/mm² ausgeübt. Der Zuführungskopf 2 bewegt sich entlang der Achse Az, bis er das andere Ende des Gürtels 10 erreicht hat. Hat der gewickelte Gürtel in axialer Richtung A eine Position erreicht, die über das axiale Ende des Gürtels hinausgeht, so erfolgt in dem Ausführungsbeispiel noch eine abschließende zusätzliche Umwicklung mit dem Gummistreifen 20, um den gewickelten Gummistreifen 20 a zu sichern. Bei dieser letzten Wickelung, die ohne einen weiteren Vortrieb des Führungskopfes 2 erfolgt, wird eine Überlappung des bereits gewickelten Gummistreifens 20 a in Kauf genommen. Wie bereits angesprochen, bewirkt die Nutzung der Andruckrolle 3 in der Wickelanlage, wie in den Figuren 1 und 2 schematisch dargestellt ist, dass es weder große Abstände zwischen den gewickelten Abschnitten des gewickelten Gummistreifens 20 a gibt, noch eine Überlappung der Gummistreifenabschnitte und der in ihnen enthaltenen Corde 24. Eine solche Überlappung ist in der Figur 4 zu sehen. In der Figur 4 ist ein Schnitt durch einen Fahrzeugluftreifen gezeigt, der nach dem bisherigen Stand der Technik gefertigt wurde. In dem Schnittbild erkennt man den in dem gezeigten Fahrzeugluftreifen enthaltenen Gürtel mit seinen Stahlcorden 14. Dieser Gürtel besteht aus einer ersten Stahlcordgürtellage 11 und einer zweiten Stahlcordgürtellage 12. In der Figur 4 darüber, d. h. in radialer Richtung außen davon, sieht man die um den Gürtel 10 gewickelte Bandage aus dem gewickelten Gummistreifen 20 a, genau genommen sieht man in dem Bild die Corde 24, 24' aus Verstärkungsfasern der Bandage, die aus einem gewickelten Gummistreifen besteht, aber auch aus zwei gewickelten Gummistreifen bestehen kann. Man erkennt, dass sich die Corde 24 und Corde 24' überlappen, d.h. sie befinden sich in radialer Richtung übereinander. In diesem Fall haben sich die nebeneinander gewickelten benachbarten Abschnitte des gewickelten Gummistreifens 20 a beim Wickelprozess überlappt. Sind zwei Gummistreifen als Bandage um den Gürtel gewickelt worden, so kann die Überlappung der Gummistreifen und damit ihrer Corde 24, 24' beim Wickelprozess entweder beabsichtigt worden sein oder aufgrund von Schwankungen im Wickelprozess passieren. Auf jeden Fall befindet sich an dieser Stelle der Überlappung der Corde 24 und 24' dann eine Schwachstelle des Fahrzeugluftreifens, da durch die Überlappung eine Asymmetrie des sich in radialer Richtung nach außen darüber befindlichen Laufstreifens 30, der ein gezeigtes Profil aufweist. Durch die Überlappung ergibt sich eine radiale Erhöhung des Fahrzeugluftreifens in diesem Bereich, was zu einer reduzierten Auflagefläche des Fahrzeugluftreifens auf der Straße führt: Diese Fläche wird auch Aufstandsfläche des Reifens genannt. Die Reduzierung der Aufstandsfläche führt dann zu einem schlechteren Bremsverhalten des Fahrzeugluftreifens. In der Figur 5 ist nun ein erfindungsgemäßer Fahrzeugluftreifen gezeigt, wobei in dem gezeigten Schnittbild sind wieder der Gürtel 10 mit zwei Stahlcordgürtellagen 11 und 12 zu erkennen sowie der Gummistreifen 20 mit seinen Corden 24 aus Verstärkungsfasern. Zudem ist wieder der Laufstreifen 30 des Fahrzeugluftreifens zu sehen. Der Laufstreifen 30 weist wieder ein Profil auf. Man erkennt sehr deutlich, dass die Corde des gewickelten Gummistreifens 20 a sich in Achsrichtung des Fahrzeugluftreifens nebeneinander angeordnet und hierbei sehr gleichmäßig beabstandet sind. Durch diese sehr homogene Struktur der Corde 24 weist ein erfindungsgemäßer Fahrzeugluftreifen keine großen Schwachstellen auf, die sich bei hohen Fahrzeuggeschwindigkeiten sehr negativ auswirken, wie zuvor beschrieben. Man erkennt also, dass die erfindungsgemäße Herstellung mit dem beanspruchten Herstellungsverfahren, die mittels der beanspruchten Herstellungsanlage erfolgt, zu einem Fahrzeugluftreifen, insbesondere einem UHP-Fahrzeugluftreifen führt, dessen Bandage eine so hochwertige Wicklung aufweist, dass hierdurch Qualität und Sicherheit des Fahrzeugluftreifens deutlich gesteigert ist. Bei dem erfindungsgemäßen Herstellungsverfahren erfolgt die Wicklung des Gummistreifens der Bandage unter einer Zugkraft. Diese Zugkraft beträgt zumeist mindestens 15 bis 20 N. Ausgeübt wird die Zugkraft auf den aufzuwickelnden Gummistreifen vorzugsweise durch die Zuführungseinrichtung, im Ausführungsbeispiel den Zuführungskopf 2. In diesem übt z. B. eine Feder, die auf eine Lenkrolle oder ein anderes Führungselement wirkt, die Kraft auf den aufzuwickelnden Gummistreifen 20 aus. Um die Stabilität eines Fahrzeugluftreifens zu steigern, kann jedoch der Gummistreifen 20 der Bandage auch mit höheren Zugkräften gewickelt werden. Entsprechend der beim Wickeln aufgebrachten Zugkraft weisen die Corde der Bandage in dem fertig gestellten erfindungsgemäßen Fahrzeugluftreifens dann eine Spannung auf, unter der sie stehen. Insbesondere durch eine Ausdehnung des gefertigten Bandagegürtelverbundes während der weiteren Fertigung des Fahrzeugluftreifens in einer Vulkanisierpresse ist die Spannung in den Corden der Bandage noch einmal erhöht gegenüber der Zugkraft, die auf die Corde in den gewickelten Gummistreifen 20 a während des Wickelprozesses aufgebracht wurde. In den Figuren 6 und 7 sind beispielhaft zwei verschiedene Zugkraftverteilungen entlang der Achsrichtung A der drehbaren Trommel 1 und damit auch der Achsrichtung A eines daraus fertiggestellten Fahrzeugluftreifens gezeigt, gemäß derer die Wicklung der Bandage unter erhöhten Zugkräften vorgenommen werden kann. Dargestellt ist jeweils, wie die Zugkraft über die Breite des Gürtels 10 variiert. Hierbei befindet sich die Mitte des Gürtels bei dem Wert 0. In dem in Figur 6 gezeigten Ausführungsbeispiel wird der Gummistreifen 20 der Bandage über die gesamte Breite der Bandage W, die in diesem Beispiel 300 mm oder etwas weniger beträgt, unter einer Zugkraft von 50 N gewickelt. Alternativ ist auch denkbar, dass die Wicklung unter einer Zugkraft von zum Beispiel 75, 100 oder 150 N erfolgt. In der Figur 7 dagegen ist eine Zugkraftverteilung gezeigt, bei der die Zugkraft nicht über die gesamte Breite W_{G} des Gürtels 10 konstant ist. Vielmehr wird in den Randbereichen des Gürtels 10, dessen Breite W_{G} zumeist etwas kleiner ist als die Bandagenbreite W, über jeweils eine Breite von 50 mm in Achsrichtung A der Gummistreifen 20 der Bandage unter einer Zugkraft von 75 N gewickelt. In den Bereichen zwischen diesen Randbereichen nimmt dann die Zugkraft von 75 N bis 15 N in der Mitte des Gürtels 10 ab. Eine derartige Wicklung berücksichtigt insbesondere, dass sich vor allem der Schulterbereich eines Fahrzeugluftreifens als Schwachstelle erweist, z. B. weil dort sich das Ende des Gürtels des Fahrzeugluftreifens befindet. Die erhöhte Zugkraft beim Wickeln bzw. die erhöhte Spannung der Corde im Schulterbereich in dem gefertigten Fahrzeugluftreifen verhindert dann insbesondere im Schulterbereich ein radiales Wachstum des Fahrzeugluftreifens bei hohen Geschwindigkeiten. Damit kann die in Figur 7 gezeigte Zugkraftverteilung insbesondere für die Fertigung von UHP-Reifen genutzt werden. Alternativ zu der in Figur 7 gezeigten Zugkraftverteilung können insbesondere im Schulterbereich auch höhere Zugkräfte auf den Gummistreifen 20 während der Wicklung wirken. Hierbei können die Zugkräfte bis zu 150 und insbesondere auch bis zu 200 N betragen. Durch die erfindungsgemäße Anlage zur Herstellung von Fahrzeugluftreifen und das dadurch ermöglichte erfindungsgemäße Herstellungsverfahren kann die Qualität und Sicherheit von Fahrzeugluftreifen gesteigert werden. Insbesondere ist es mit dieser Anlage und den zugehörigen Verfahren erstmals möglich, die erfindungsgemäßen Fahrzeugluftreifen mit ihren sehr hohen Anforderungen herzustellen.

### Bezugszeichenliste

- 1: drehbare Trommel
- 2: Zuführungskopf
- 3: Andrückrolle
- 4: Antrieb der drehbaren Trommel
- 10: Gürtel
- 11: erste Stahlcordgürtellage
- 12: zweite Stahlcordgürtellage
- 14: Stahlcord des Gürtels
- 20: Gummistreifen
- 20 a: gewickelter Gummistreifen
- 24, 24': Corde des Gummistreifens
- 25: weitere Wicklung des Gummistreifens
- 30: Laufstreifen eines Fahrzeugluftreifens
- A: Rotationsachse der drehbaren Trommel
- A_{A}: Rotationsachse der Andrückrolle
- Az: Achsrichtung des Führungskopfes
- W: Bandagenbreite
- W_{G}: Gürtelbreite

## Patentansprüche

1. Fahrzeugluftreifen mit einem Gürtel (10) bestehend aus mindestens einer über den Reifenumfang umlaufenden Stahlcordgürtellage (11, 12) und einer Bandage, die über den gesamten Reifenumfang radial außen an dem Gürtel (10) anliegt, wobei die Bandage aus einem Gummistreifen (20a) besteht, in dem zwei bis sechs Corde (24) aus Verstärkungsfasern enthalten sind, und dieser Gummistreifen (20a) mindestens von einem axialen Ende des Gürtels (10) bis zu mindestens dem anderen axialen Ende des Gürtels (10) um den Gürtel (10) in einer Wickelrichtung (25) relativ zur Umfangsrichtung des Fahrzeugluftreifens gewickelt ist, wobei das Verhältnis der Komponente der Wickelrichtung in Achsrichtung (A) zu der Komponente der Wickelrichtung in Umfangsrichtung entlang des Gummistreifens (20a) kleiner als 0,01 ist und über mindestens 70 % der Breite (W_{G}) des Gürtels (10) in Achsrichtung (A) um nicht mehr als 2 % variiert,
**dadurch gekennzeichnet,**
**dass** der Abstand zweier benachbarter Corde (24) in zwei nebeneinander liegenden Abschnitten des Gummistreifens (20a) bei jeder Umfangsposition um nicht mehr als 5 % gegenüber dem Abstand der Corde (24) im Gummistreifen (20a) variiert und die Corde (24) in der Bandage über mindestens 25 % der Breite (W_{G}) des Gürtels (10) in Achsrichtung (A) unter einer Spannung von mindestens 3 N/mm² stehen.

2. Fahrzeugluftreifen gemäß Patentanspruch 1, **dadurch gekennzeichnet, dass** der Abstand der zweier benachbarter Corde (24) in zwei nebeneinander liegender Abschnitten des Gummistreifens (20a) bei jeder Umfangsposition um nicht mehr als 2 % gegenüber dem Abstand der Corde (24) im Gummistreifen (20a) variiert, bevorzugt um nicht mehr nicht mehr als 1 % gegenüber dem Abstand der Corde (24) im Gummistreifen (20a) variiert und besonders bevorzugt um nicht mehr nicht mehr als 0,5 % gegenüber dem Abstand der Corde (24) im Gummistreifen (20a) variiert.

3. Fahrzeugluftreifen gemäß Patentanspruch 1 oder 2, **dadurch gekennzeichnet, dass** die Corde (24) in der Bandage über mindestens 40 % der Breite (W_{G}) des Gürtels (10) in Achsrichtung (A) unter einer Spannung von mindestens 3 N/mm² stehen, bevorzugt über mindestens 60 % der Breite (W_{G}) des Gürtels (10) in Achsrichtung (A) unter einer Spannung von mindestens 3 N/mm² stehen und besonders bevorzugt über mindestens 80 % der Breite (W_{G}) des Gürtels (10) in Achsrichtung (A) unter einer Spannung von mindestens 3 N/mm² stehen.

4. Fahrzeugluftreifen gemäß Patentanspruch 1 oder 3, **dadurch gekennzeichnet, dass** die Corde (24) in der Bandage über mindestens 25 % der Breite (W_{G}) des Gürtels (10) in Achsrichtung (A) , bevorzugt über mindestens 40 % der Breite (W_{G}) des Gürtels (10) in Achsrichtung (A), besonders bevorzugt über mindestens 60 % der Breite (W_{G}) des Gürtels (10) in Achsrichtung (A) und ganz besonders bevorzugt über mindestens 80 % der Breite (W_{G}) des Gürtels (10) in Achsrichtung (A) unter einer Spannung von mindestens 12 N/mm² stehen, bevorzugt unter einer Spannung von mindestens 30 N/mm² stehen und besonders bevorzugt unter einer Spannung von mindestens 80 N/mm² stehen.

5. Fahrzeugluftreifen gemäß Patentanspruch 1, 3 oder 4, **dadurch gekennzeichnet, dass** über mindestens 25 %, 40 %, 60 % oder 80 % der Breite (W_{G}) des Gürtels (10) in Achsrichtung (A) die Spannung, unter der die Corde (24) in der Bandage stehen, nur um maximal 5 % schwankt, bevorzugt nur um 1 % schwankt und besonders bevorzugt nur um 0,3 % schwankt.

6. Verfahren zur Herstellung eines Fahrzeugluftreifens mit einem Gürtel (10) bestehend aus mindestens einer über den Reifenumfang umlaufenden Stahlcordgürtellage (11, 12) und einer Bandage, die über den gesamten Reifenumfang radial außen an dem Gürtel (10) anliegt, bei dem in einem Herstellungsschritt die Bandage, die aus einem Gummistreifen (20a) besteht, in dem zwei bis sechs Corde (24) aus Verstärkungsfasern enthalten sind, außen auf den Gürtel (10) gewickelt wird, der auf einer drehbaren Trommel (1) positioniert ist, wobei der Gummistreifen (20a) mittels eines Zuführungseinrichtung (2) der Trommel (1) zugeführt wird, der Gummistreifen (20a) mittels einer Andrückeinrichtung (3) während des Aufwickelns an die Außenseite des Gürtels (10) gedrückt wird und der zugeführte Gummistreifen (20a) durch die Rotation der drehbaren Trommel (1) aufgewickelt wird, wobei sich die axiale Position der Zuführungseinrichtung (2) während des Aufwickelns gleichmäßig mindestens von dem einen axialen Ende des Gürtels (10) zum anderen bewegt,
wobei der Gummistreifen (20a) durch eine Bewegung der Zuführungseinrichtung (2) entlang einer zur Achsrichtung (A) der drehbaren Trommel (1) parallelen Bewegungsachse (Az) in einer Wickelrichtung relativ zur Umfangsrichtung der drehbaren Trommel (1) gewickelt wird, bei der das Verhältnis ihrer Komponente in Achsrichtung (A) der drehbaren Trommel (1) zu der Komponente ihrer Richtung in der Umfangsrichtung kleiner als 0,01 ist und über mindestens 85 % der Breite (W_{G}) des Gürtels (10) in Achsrichtung (A) um nicht mehr als 2 % variiert,
wobei durch die Rotation der drehbaren Trommel (1) beim Wickeln der Bandage um den Gürtel (10) der Gummistreifen (20a) der Bandage über mindestens 25 % der Breite (W_{G}) des Gürtels (10) in Achsrichtung (A) unter einer Zugkraft von 10 N bis 200 N, vorzugsweise unter einer Zugkraft von 50 N bis 150 N und besonders bevorzugt unter einer Zugkraft von 80 N bis 120 N gewickelt wird.

## Claims

1. Pneumatic vehicle tyre with a belt (10) consisting of at least one steel cord belt ply (11, 12), which encircles the tyre circumference, and a bandage which externally bears radially on the belt (10) over the entire tyre circumference, wherein the bandage consists of a rubber strip (20a) in which two to six cords (24) of reinforcement fibres are contained, and this rubber strip (20a) in a winding direction (25) relative to the circumferential direction of the pneumatic vehicle tyre is wound about the belt (10) at least from one axial end of the belt (10) up to at least the other axial end of the belt (10), wherein the ratio of the component of the winding direction in the axial direction (A) to the component of the winding direction in the circumferential direction along the rubber strip (20a) is less than 0.01, and does not vary by more than 2% over at least 70% of the width (W_{G}) of the belt (10) in the axial direction (A),
**characterized in that**
the spacing of two neighbouring cords (24) in two adjacent portions of the rubber strip (20a) at each circumferential position does not vary by more than 5% in comparison to the spacing of the cords (24) in the rubber strip (20a), and the cords (24) in the bandage are subjected to a tension of at least 3 N/mm² over at least 25% of the width (W_{G}) of the belt (10) in the axial direction (A).

2. Pneumatic vehicle tyre according to Patent Claim 1, **characterized in that** the spacing of the two neighbouring cords (24)in two adjacent portions of the rubber strip (20a) at each circumferential position does not vary by more than 2% in comparison to the spacing of the cords (24) in the rubber strip (20a), preferably does not vary by more than 1% in comparison to the spacing of the cords (24) in the rubber strip (20a), and particularly preferably does not vary by more than 0.5% in comparison to the spacing of the cords (24) in the rubber strip (20a).

3. Pneumatic vehicle tyre according to Patent Claim 1 or 2, **characterized in that** the cords (24) in the bandage are subjected to a tension of at least 3 N/mm² over at least 40% of the width (W_{G}) of the belt (10) in the axial direction (A), preferably are subjected to a tension of at least 3 N/mm² over at least 60% of the width (W_{G}) of the belt (10) in the axial direction (A), and particularly preferably are subjected to a tension of at least 3 N/mm² over at least 80% of the width (W_{G}) of the belt (10) in the axial direction (A).

4. Pneumatic vehicle tyre according to Patent Claim 1 or 3, **characterized in that** the cords (24) in the bandage are subjected to a tension of at least 12 N/mm², preferably are subjected to a tension of at least 30 N/mm², and particularly preferably are subjected to a tension of at least 80 N/mm² over at least 25% of the width (W_{G}) of the belt (10) in the axial direction (A), preferably over at least 40% of the width (W_{G}) of the belt (10) in the axial direction (A), particularly preferably over at least 60% of the width (W_{G}) of the belt (10) in the axial direction (A), and most preferably over at least 80% of the width (W_{G}) of the belt (10) in the axial direction (A).

5. Pneumatic vehicle tyre according to Patent Claim 1, 3 or 4, **characterized in that** over at least 25%, 40%, 60% or 80 % of the width (W_{G}) of the belt (10) in the axial direction (A), the tension to which the cords (24) in the bandage are subjected fluctuates only by at most 5%, preferably fluctuates only by 1%, and particularly preferably fluctuates only by 0.3%.

6. Method for producing a pneumatic vehicle tyre with a belt (10) consisting of at least one steel cord belt ply (11, 12), which encircles the tyre circumference, and a bandage which externally bears radially on the belt (10) over the entire tyre circumference, in which method, in a manufacturing step, the bandage consisting of a rubber strip (20a) in which two to six cords (24) of reinforcement fibres are contained, is wound externally on the belt (10) which is positioned on a rotatable drum (1), wherein the rubber strip (20a) is fed to the drum (1) by means of a feed device (2); the rubber strip (20a) during winding is pressed onto the outside of the belt (10) by means of a contact pressure device (3), and the fed rubber strip (20a) is wound by the rotation of the rotatable drum (1), wherein the axial position of the feed device (2) during winding moves uniformly from at least one axial end of the belt (10) to the other;
wherein the rubber strip (20a), as a result of a movement of the feed device (2) along a movement axis (Az) parallel to the axial direction (A) of the rotatable drum (1), is wound in a winding direction relative to the circumferential direction of the rotatable drum (1), wherein the ratio of the component of said winding direction in the axial direction (A) of the rotatable drum (1) to the component of the direction of said winding direction in the circumferential direction is less than 0.01, and does not vary by more than 2% over at least 85% of the width (W_{G}) of the belt (10) in the axial direction (A);
wherein, as a result of the rotation of the rotatable drum (1) when winding the bandage about the belt (10), the rubber strip (20a) of the bandage is wound at a tensile force of 10 N to 200 N, preferably at a tensile force of 50 N to 150 N, and particularly preferably at a tensile force of 80 N to 120 N, over at least 25% of the width (W_{G}) of the belt (10) in the axial direction (A).

## Revendications

1. Pneumatique de véhicule avec une ceinture (10) constituée d'au moins une couche de ceinture en câbles d'acier (11, 12) s'étendant sur la circonférence du pneumatique et d'un bandage qui s'applique radialement à l'extérieur sur la ceinture (10) sur toute la circonférence du pneu, le bandage étant constitué d'une bande de caoutchouc (20a) dans laquelle sont contenus deux à six câbles (24) de fibres de renforcement, et cette bande de caoutchouc (20a) étant enroulée autour de la ceinture (10) dans une direction d'enroulement (25) par rapport à la direction circonférentielle du pneumatique de véhicule, au moins depuis une extrémité axiale de la ceinture (10) jusqu'à au moins l'autre extrémité axiale de la ceinture (10), le rapport entre la composante de la direction d'enroulement dans la direction axiale (A) et la composante de la direction d'enroulement dans la direction circonférentielle le long de la bande de caoutchouc (20a) étant inférieur à 0,01 et ne variant pas de plus de 2 % sur au moins 70 % de la largeur (W_{G}) de la ceinture (10) dans la direction axiale (A),
**caractérisé en ce que**
la distance entre deux câbles voisins (24) dans deux sections juxtaposées de la bande de caoutchouc (20a) ne varie pas de plus de 5 % par rapport à la distance entre les câbles (24) dans la bande de caoutchouc (20a) pour chaque position circonférentielle, et les câbles (24) dans le bandage se trouvent sous une tension d'au moins 3 N/mm² sur au moins 25 % de la largeur (W_{G}) de la ceinture (10) dans la direction axiale (A).

2. Pneumatique de véhicule selon la revendication 1, **caractérisé en ce que** la distance entre deux câbles voisins (24) dans deux sections juxtaposées de la bande de caoutchouc (20a) à chaque position circonférentielle ne varie pas de plus de 2 % par rapport à la distance entre les câbles (24) dans la bande de caoutchouc (20a), de préférence, ne varie pas de plus de 1 % par rapport à la distance entre les câbles (24) dans la bande de caoutchouc (20a) et, de manière particulièrement préférée, ne varie pas de plus de 0,5 % par rapport à la distance entre les câbles (24) dans la bande de caoutchouc (20a).

3. Pneumatique de véhicule selon la revendication 1 ou 2, **caractérisé en ce que** les câbles (24) dans le bandage se trouvent sous une tension d'au moins 3 N/mm² sur au moins 40 % de la largeur (W_{G}) de la ceinture (10) dans la direction axiale (A), de préférence se trouvent sous une tension d'au moins 3 N/mm² sur au moins 60 % de la largeur (W_{G}) de la ceinture (10) dans la direction axiale (A) et de manière particulièrement préférée se trouvent sous une tension d'au moins 3 N/mm² sur au moins 80 % de la largeur (W_{G}) de la ceinture (10) dans la direction axiale (A).

4. Pneumatique de véhicule selon la revendication 1 ou 3, **caractérisé en ce que** les câbles (24) dans le bandage se trouvent sous une tension d'au moins 12 N/mm², de préférence se trouvent sous une tension d'au moins 30 N/mm² et de manière particulièrement préférée se trouvent sous une tension d'au moins 80 N/mm², sur au moins 25 % de la largeur (W_{G}) de la ceinture (10) dans la direction axiale (A), de préférence sur au moins 40 % de la largeur (W_{G}) de la ceinture (10) dans la direction axiale (A), de manière particulièrement préférée sur au moins 60 % de la largeur (W_{G}) de la ceinture (10) dans la direction axiale (A) et de manière tout particulièrement préférée sur au moins 80 % de la largeur (W_{G}) de la ceinture (10) dans la direction axiale (A).

5. Pneumatique de véhicule selon la revendication 1, 3 ou 4, **caractérisé en ce que**, sur au moins 25 %, 40 %, 60 % ou 80 % de la largeur (W_{G}) de la ceinture (10) dans la direction axiale (A), la tension sous laquelle les câbles (24) se trouvent dans le bandage ne varie que de 5 % au maximum, de préférence ne varie que de 1 % et de manière particulièrement préférée ne varie que de 0,3 %.

6. Procédé de fabrication d'un pneumatique de véhicule avec une ceinture (10) constituée d'au moins une couche de ceinture en câbles d'acier (11, 12) s'étendant sur la circonférence du pneu et d'un bandage qui s'applique radialement à l'extérieur sur la ceinture (10) sur toute la circonférence du pneu, dans lequel, au cours d'une étape de fabrication, le bandage, qui est constitué d'une bande de caoutchouc (20a) dans laquelle sont contenus deux à six câbles (24) de fibres de renforcement, est enroulé à l'extérieur sur la ceinture (10) qui est positionnée sur un tambour rotatif (1), la bande de caoutchouc (20a) étant amenée au tambour (1) au moyen d'un dispositif d'amenée (2), la bande de caoutchouc (20a) étant pressée contre le côté extérieur de la ceinture (10) au moyen d'un dispositif de pression (3) pendant l'enroulement, et la bande de caoutchouc (20a) amenée étant enroulée par la rotation du tambour rotatif (1), la position axiale du dispositif d'amenée (2) se déplaçant uniformément au moins d'une extrémité axiale de la ceinture (10) à l'autre pendant l'enroulement,
la bande de caoutchouc (20a) étant enroulée par un déplacement du dispositif d'amenée (2) le long d'un axe de déplacement (Az) parallèle à la direction axiale (A) du tambour rotatif (1) dans une direction d'enroulement par rapport à la direction circonférentielle du tambour rotatif (1), le rapport entre sa composante dans la direction axiale (A) du tambour rotatif (1) et la composante de sa direction dans la direction circonférentielle étant inférieur à 0,01 et ne variant pas de plus de 2 % sur au moins 85 % de la largeur (W_{G}) de la ceinture (10) dans la direction axiale (A),
par la rotation du tambour rotatif (1) lors de l'enroulement du bandage autour de la ceinture (10), la bande de caoutchouc (20a) du bandage étant enroulée sur au moins 25 % de la largeur (W_{G}) de la ceinture (10) dans la direction axiale (A) sous une force de traction de 10 N à 200 N, de préférence sous une force de traction de 50 N à 150 N et de manière particulièrement préférée sous une force de traction de 80 N à 120 N.
